# EUROPEAN PATENT APPLICATION

(11) **EP 4 832 286 A1**
(43) Date of publication of application: **28.10.2026**
(21) Application number: 26172323.3
(22) Date of filing: 14.04.2026
(51) Int. Cl.: H02H 9/00

(54) **CIRCUITS AND METHODS FOR DAMPING ELECTRICAL LOAD CHANGES**

(30) Priority: 14.04.2025 US 202519178527
(71) Applicant: Textron Innovations Inc., Providence, Rhode Island 02903 (US)
(72) Inventor: SPEARS, Steven K, Hurst, TX 76053 (US); JEFFERSON, Samuel, Cedar Hill, TX 75104 (US); BROWN, Jason A, Hurst, TX 76054 (US); SCHULTE, Kynn J, Arlington, TX 76015 (US)
(74) Representative: Barker Brettell LLP

(57) **Abstract**

An electrical circuit for damping an electrical load includes a multi-step ramping circuit (1430) with one or more ramping steps configured to distribute an increase of power applied by a power source to a voltage output node from zero to full power over a plurality of ramp-up steps during a ramping up period, and distribute a decrease of power from full power to zero over a plurality of ramp-down steps during a ramping down period. The circuit includes an auxiliary load circuit (1435) coupled to the voltage output node, with an auxiliary load configured with a value corresponding to a value of the electrical load. A control unit (1415) detects activation or deactivation of the electrical load, activates the ramping stages in sequence to increase power during activation, and activates the auxiliary load circuit (1435) to replace the electrical load and deactivates the ramping stages in sequence to decrease power during deactivation.

## Description

### TECHNICAL FIELD

The present disclosure relates generally to electrical power circuits, and more particularly to circuits and methods for damping electrical load changes.

### BACKGROUND

Some electrical systems and devices instantaneously apply and remove resistive loads from electrical power supplies. For example, an ice protection system in an aircraft may apply instantaneous step load changes to the electrical generators of the aircraft during operation. The instantaneous application and removal of resistive loads to electrical power supplies such as electrical generators in an aircraft may cause numerous undesirable issues in the electrical system or in the mechanical system providing power to the generator. For example, the instantaneous step load changes applied to electrical generators of an aircraft by an ice protection system may excite a natural frequency of the coupled mechanical system. This may result in undesirable oscillatory loads or other characteristics in the mechanical system of the aircraft.

### SUMMARY

The present disclosure achieves technical advantages as systems, circuits, and methods for damping electrical load changes. In particular embodiments, a load damping system may be configured to be disposed between a power source and an electrical load configured to utilize the power provided from the power source. In embodiments, activation and/or deactivation of the electrical load may be controlled by an external controller, such that the load damping system may not have control of when the electrical load may be activated and/or deactivated. The load damping system may be configured to detect (e.g., via an event detector) when the electrical load is activated (e.g., when the electrical load is turned on, engaged with the power source, and/or begins drawing power from the power source) and to control (e.g., via a control unit) the power supplied to the electrical load such that the power is gradually increased from zero to full power over a ramping up period, which may operate to prevent the power from the power source to instantaneously increase to full power causing the undesirable issues described above. Additionally or alternatively, the load damping system may be configured to detect (e.g., via the event detector) when the electrical load is deactivated (e.g., when the electrical load is turned off, removed or shed from the power source, and/or stops drawing power from the power source), to rapidly (e.g., within a threshold value less than five milliseconds) replace the electrical load with an auxiliary load (e.g., of an auxiliary load circuitry) of approximately the same value (e.g., within + or - 10%) as the electrical load, and to control (e.g., via the control unit) the power supplied to the auxiliary load such that the power is gradually decreased from full power to zero over a ramping down period, which may operate to prevent the full power from the power source from dropping down to zero instantaneously when the electrical load is removed causing the undesirable issues described above.

In particular embodiments, the configuration of the load damping system to gradually increase the power supplied to the electrical load from zero to full power over the ramping up period may include a multi-step ramping configuration and/or a modulated ramping configuration. In embodiments, the multi-step ramping configuration of the load damping system may include multi-step ramping circuitry configured to increase the power supplied to the electrical load from zero to full power over a plurality of ramp-up steps during the ramping up period such that the power is increased by a fraction of the full power at each ramp-up step until full power is reached. In embodiments, the modulated ramping configuration of the load damping system may include modulated ramping circuitry configured to modulate the increase of the power supplied to the electrical load from zero to full power during the ramping up period such that the power is increased based on a function of time until full power is reached. In embodiments, the function of time may be linear, exponential, logarithmic, stepwise, etc., and the modulation of the increase of the power during the ramping up period may be based on a pulse width modulation (PWM) signal configured to control an increase of a duty cycle of a modulation switch associated with the modulated ramping circuitry.

In particular embodiments, the configuration of the load damping system to gradually decrease the power supplied to the auxiliary load (e.g., after the electrical load is rapidly replaced with the auxiliary load in response to the electrical load being shed from the power source) from full power to zero during the ramping down period may leverage the multi-step ramping configuration and/or the modulated ramping configuration of the load damping system. For example, in embodiments, the multi-step ramping circuitry of the multi-step ramping configuration of the load damping system may be configured to decrease the power supplied to the auxiliary load from full power to zero over a plurality of ramp-down steps during the ramping down period such that the power is decreased by a fraction of the full power at each ramp-down step until zero power is reached. In embodiments, the modulated ramping circuitry of the modulated ramping configuration of the load damping system may be configured to modulate the decrease of the power supplied to the auxiliary load from full power to zero during the ramping down period such that the power is decreased based on a function of time until full power is reached, which may be linear, exponential, logarithmic, stepwise, etc., and the modulation of the decrease of the power during the ramping down period may be based on a PWM signal configured to control a decrease of the duty cycle of the modulation switch associated with the modulated ramping circuitry.

In embodiments, such as in embodiments implementing the multi-step ramping configuration of the load damping system, each of the ramp-up steps and/or the ramp-down steps may have a duration. In this manner, the duration of a step may define a time interval between each step-down and/or step-up of the power (e.g., may define a delay between the power step downs during ramp down and/or the power step ups during ramp up). In embodiments, the time duration of each of the ramp-up steps and/or the ramp-down may be configured as a function of the mechanical system natural frequency, ωn, so that successive steps occur at a point in time that minimizes the oscillatory response in the mechanical system, which may operate to address the issues with current systems that lack any functionality to address the sudden application of an electrical load to a system or the sudden shedding of the electrical load.

In embodiments, an electrical circuit for damping an electrical load includes a ramping resistor coupled in series to a voltage output node, a ramping switch coupled in parallel with the ramping resistor, an auxiliary load resistor coupled to the voltage output node and an auxiliary load switch that is coupled to a ground node, and a control unit. The control unit is configured to detect that an electrical load has been activated, in response to detecting that the electrical load has been activated, apply a reduced power to the voltage output node by sending an electrical signal to open the ramping switch to direct the electrical current through the ramping resistor, and after a predetermined amount of time after applying the reduced power to the voltage output node, apply a full power to the voltage output node by sending an electrical signal to close the ramping switch to bypass the ramping resistor. In embodiments, the control unit is further configured to detect that the electrical load has been deactivated, in response to detecting that the electrical load has been deactivated, replace the electrical load with an auxiliary load by sending an electrical signal to close the auxiliary load switch to direct the electrical current through the auxiliary load resistor, apply a reduced power to the voltage output node and the auxiliary load by sending an electrical signal to open the ramping switch to direct the electrical current through the ramping resistor and the auxiliary load resistor, and after a predetermined amount of time after applying the reduced power to the voltage output node and the auxiliary load, remove all power from the voltage output node and the auxiliary load by sending an electrical signal to open the auxiliary load switch.

In some embodiments, an electrical circuit for damping an electrical load includes a bypass switch coupled in series to a voltage output node, an auxiliary load resistor coupled to the voltage output node and an auxiliary load switch that is coupled to a ground node, a modulated switch that is coupled in parallel with the bypass resistor, and a control unit. The control unit is configured to detect that an electrical load coupled to the voltage output node has been activated, and in response to detecting that the electrical load has been activated, modulate an increase of a power applied to the electrical load through the voltage output node from zero to full power over a ramping up period by gradually increasing a duty cycle of the modulated switch from zero to 100% over the ramping up period. In embodiments, an amount of power applied to the electrical load is based on the duty cycle of the modulated switch, and a 100% duty cycle for the modulated switch is configured to apply full power to the electrical load through the voltage output node. In embodiments, the control unit is further configured to detect that the electrical load has been deactivated, in response to detecting that the electrical load has been deactivated, replace the electrical load with an auxiliary load by sending an electrical signal to close the auxiliary load switch to direct the electrical current through the auxiliary load resistor, direct the electrical current through the modulated switch, and modulate a decrease of the power applied to the auxiliary load from full power to zero over a ramping down period by gradually decreasing the duty cycle of the modulated switch from 100% to zero over the ramping down period. In embodiments, a zero duty cycle for the modulated switch is configured to provide no power to the electrical load through the voltage output node. The control unit is further configured to send an electrical signal to open the auxiliary load switch in response to the duty cycle of the modulated switch reaching zero.

In some embodiments, a method of damping an electrical load includes sensing, using a current sensing unit, that an electrical current caused by the electrical load has exceeded a predetermined threshold. The method further includes applying, in response to sensing that the electrical current has exceeded the predetermined threshold, a reduced power to a voltage output node by sending an electrical signal to open a first switch to force the electrical current through a ramp-up resistor. The method further includes applying, after a predetermined amount of time after applying the reduced power to the voltage output node, a full power to the voltage output node by sending an electrical signal to close the first switch, thereby shorting out the ramp-up resistor.

The foregoing has outlined rather broadly the features and technical advantages of the present disclosure in order that the detailed description of the disclosure that follows may be better understood. Additional features and advantages of the disclosure will be described hereinafter which form the subject of the claims of the disclosure. It should be appreciated by those skilled in the art that the conception and specific embodiment disclosed may be readily utilized as a basis for modifying or designing other structures for carrying out the same purposes of the present disclosure. It should also be realized by those skilled in the art that such equivalent constructions do not depart from the spirit and scope of the disclosure as set forth in the appended claims. The novel features which are believed to be characteristic of the disclosure, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

For a more complete understanding of the present disclosure, reference is now made to the following descriptions taken in conjunction with the accompanying drawings, in which:
FIGURE 1 illustrates a system that utilizes a load damping controller, according to certain embodiments;
FIGURE 2 illustrates a torque response of the system of FIGURE 1 without load damping, according to certain embodiments;
FIGURE 3 illustrates a load damping controller that may be utilized by the system of FIGURE 1, according to certain embodiments;
FIGURES 4-7 illustrate various states of the load damping controller of FIGURE 3, according to certain embodiments;
FIGURE 8 illustrates another load damping controller that may be utilized by the system of FIGURE 1, according to certain embodiments;
FIGURES 9-12 illustrate various states of the load damping controller of FIGURE 8, according to certain embodiments;
FIGURE 13 illustrates a load damping controller that may be utilized by the system of FIGURE 1, according to certain embodiments;
FIGURE 14A illustrates a load damping system that may be utilized by the system of FIGURE 1, according to certain embodiments.
FIGURE 14B illustrates another configuration of load damping system that may be utilized by the system of FIGURE 1, according to certain embodiments;
FIGURE 15 is a flow diagram of a method of damping an electrical load, according to certain embodiments;
FIGURE 16 is another flow diagram of a method of damping an electrical load, according to certain embodiments; and
FIGURE 17 is yet another flow diagram of a method of damping an electrical load, according to certain embodiments.

It should be understood that the drawings are not necessarily to scale and that the disclosed embodiments are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular embodiments illustrated herein.

### DETAILED DESCRIPTION

The disclosure presented in the following written description and the various features and advantageous details thereof, are explained more fully with reference to the non-limiting examples included in the accompanying drawings and as detailed in the description. Descriptions of well-known components have been omitted to not unnecessarily obscure the principal features described herein. The examples used in the following description are intended to facilitate an understanding of the ways in which the disclosure can be implemented and practiced. A person of ordinary skill in the art would read this disclosure to mean that any suitable combination of the functionality or exemplary embodiments below could be combined to achieve the subject matter claimed. The disclosure includes either a representative number of species falling within the scope of the genus or structural features common to the members of the genus so that one of ordinary skill in the art can recognize the members of the genus. Accordingly, these examples should not be construed as limiting the scope of the claims.

A person of ordinary skill in the art would understand that any system claims presented herein encompass all of the elements and limitations disclosed therein, and as such, require that each system claim be viewed as a whole. Any reasonably foreseeable items functionally related to the claims are also relevant. The Examiner, after having obtained a thorough understanding of the disclosure and claims of the present application has searched the prior art as disclosed in patents and other published documents, i.e., nonpatent literature. Therefore, as evidenced by issuance of this patent, the prior art fails to disclose or teach the elements and limitations presented in the claims as enabled by the specification and drawings, such that the presented claims are patentable under the applicable laws and rules of this jurisdiction.

Some electrical systems and devices instantaneously apply and remove resistive loads from electrical power supplies. For example, an ice protection system (IPS) in an aircraft may apply instantaneous step load changes to the electrical generators of the aircraft during operation. The instantaneous application and removal of resistive loads to electrical power supplies such as electrical generators in an aircraft may cause numerous undesirable issues in the electrical system or in the mechanical system providing power to the generator. For example, the instantaneous step load changes applied to electrical generators of an aircraft by an ice protection system may excite a natural frequency of the coupled mechanical system. This may result in undesirable oscillatory loads or other characteristics in the mechanical system of the aircraft.

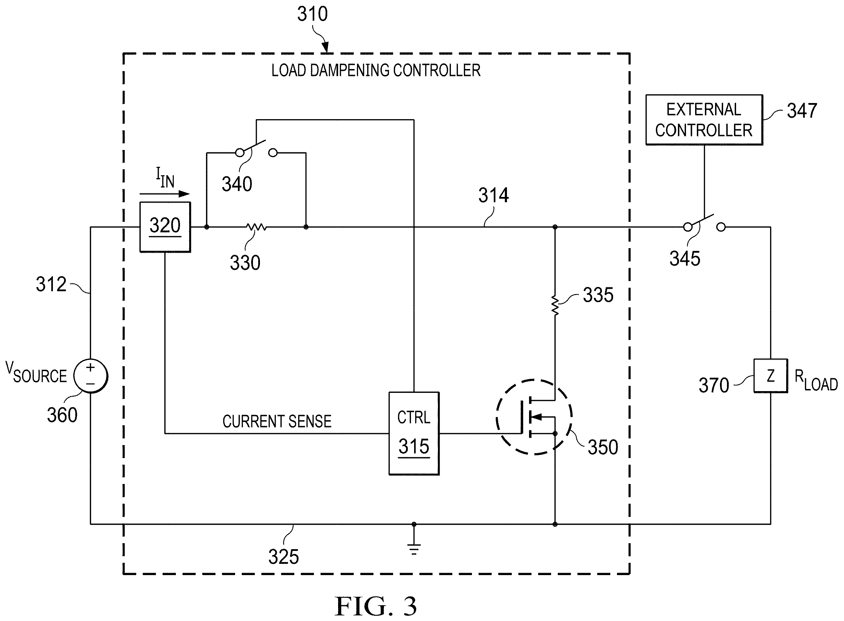

To address these and other problems associated with the application of step load changes to electrical power supplies such as the loads applied to electrical generators by an ice protection system of an aircraft, the enclosed embodiments provide circuits and methods for damping electrical load changes. In general, certain embodiments of the circuits and methods described herein split the change in electrical load application by an electrical device (e.g., an ice protection system of an aircraft) into two or more smaller steps with a time delay in between. The length of the time delay is predetermined so that the second step, in the case of a design with two steps, occurs at a point in time when the mechanical system response is in the opposite sense of the load input. More specifically, the embodiments described herein sense that an electrical load is being applied and, in response, introduce a series resistance in line with the electrical load to limit or reduce the initial power to the electrical system. After a specific amount of time, the disclosed embodiments engage a contactor to short out the series resistance in order to apply the full load to the electrical system. The disclosed embodiments may also sense when the electrical load is removed so that an auxiliary or replacement load can be quickly applied to the electrical system in order to provide a step down from the electrical load turning off. In embodiments, the step down may be provided by opening a main switch (e.g., switch 340 as described with reference to FIG 3) after the auxiliary electric load is applied to allow for the step down using a series resistor 330 (e.g., series resistor 330 of FIGURE 3). As a result, electrical load changes, such as the step load changes applied to generators by an ice protection system of an aircraft, are damped. This may help to improve component and aircraft lives and reliability.

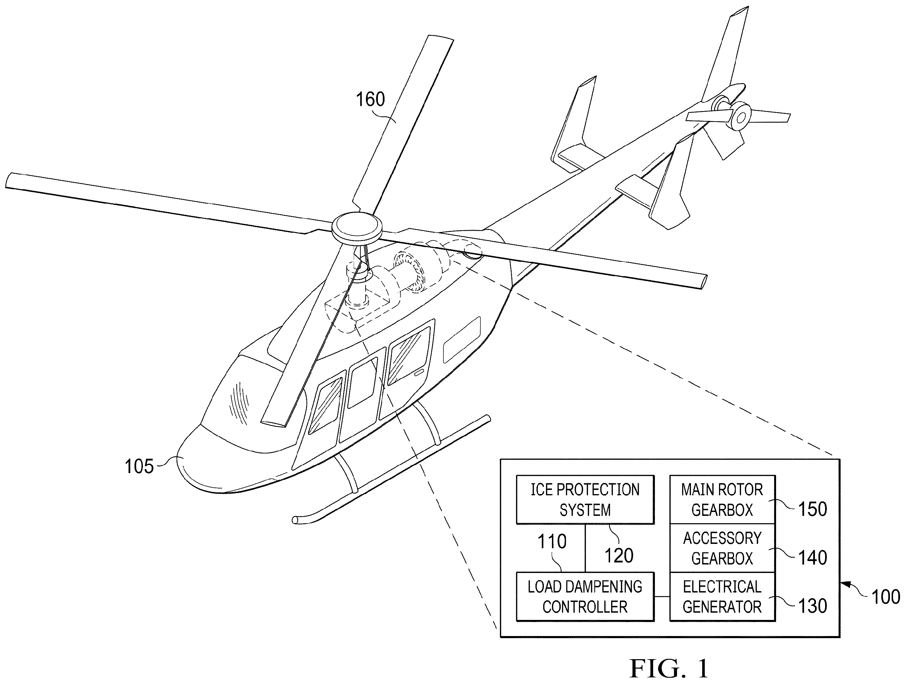

FIGURE 1 illustrates a system 100 that utilizes a load damping controller 110 to damp electrical load changes, according to certain embodiments. In some embodiments, system 100 is contained within an aircraft 105 (e.g., a rotorcraft, an airplane, and the like). In other embodiments, load damping controller 110 may be utilized in any other appropriate system that may not be located in an aircraft 105. In some embodiments, system 100 includes load damping controller 110, an ice protection system 120, an electrical generator 130, an accessory gearbox 140, and a main rotor gearbox 150. Electrical generator 130 may be coupled to accessory gearbox 140. Accessory gearbox 140 may be coupled to main rotor gearbox 150 which in turn is coupled to a main rotor 160. Electrical generator 130 is electrically coupled to load damping controller 110, which in turn is electrically coupled to ice protection system 120.

In operation, one or more engines (not illustrated) of aircraft 105 supply mechanical power to main rotor gearbox 150 in order to rotate main rotor 160 during flight. Accessory gearbox 140 receives mechanical power through main rotor gearbox 150 and in turn spins electrical generator 130 in order to supply electrical power to ice protection system 120 and other electrical systems within aircraft 105. Ice protection system 120 receives electrical power generated by electrical generator 130 and rapidly enables and disables various electric heating elements (not illustrated) within main rotor 160 in order to eliminate or prevent ice buildup on main rotor 160. Without load damping controller 110, the instantaneous or near-instantaneous enabling and disabling of the electric heating elements of ice protection system 120 cause electrical step load changes at electrical generator 130. These electrical step load changes from ice protection system 120 (in the absence of load damping controller 110) may excite a natural frequency response within the mechanical system of aircraft 105 (e.g., accessory gearbox 140 and main rotor gearbox 150) due to electrical generator 130 being mechanically coupled to accessory gearbox 140. This may ultimately result in undesirable oscillatory loads in the mechanical system of aircraft 105.

It is noted that while embodiments described herein may focus on damping electrical load changes related to ice protection systems for an aircraft's main rotor, the techniques and devices disclosed herein may be applied to other aircraft systems and/or components as well. For example, the load damping controller may be utilized for ice protection systems on an aircraft's tail rotor or windshield. In some embodiments, the techniques and devices disclosed herein may even be applied to non-aircraft systems that experience similar instantaneous electrical load changes. The principles of splitting load changes into smaller steps with time delays may be beneficial in various applications where damping electrical transients may be desired.

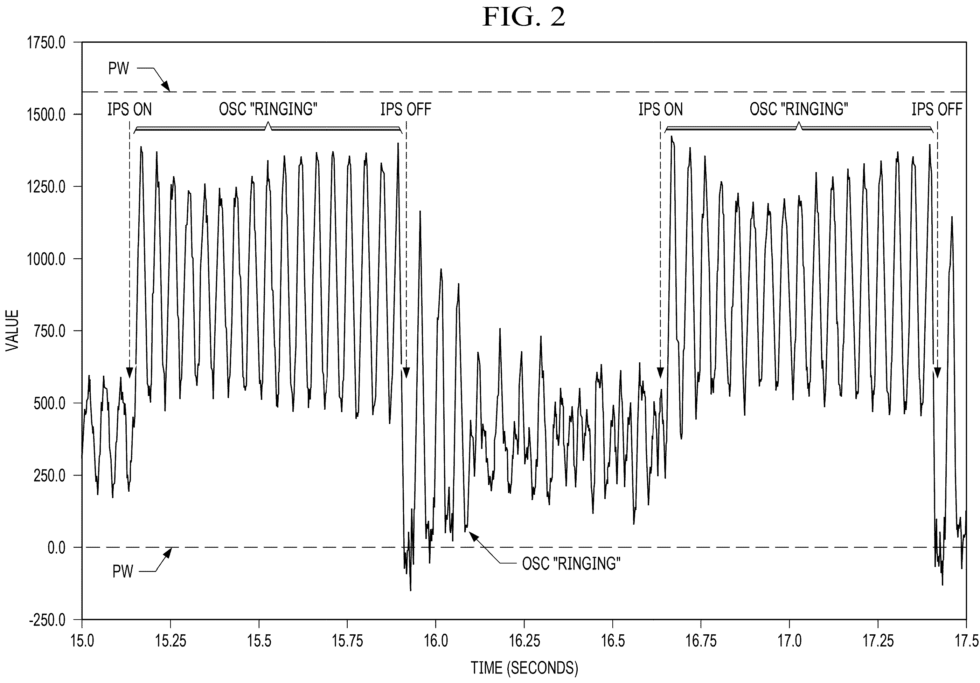

FIGURE 2 illustrates undesirable oscillatory loads in the mechanical system of aircraft 105 due to electrical step load changes at electrical generator 130 caused by ice protection system 120 turning on and off. In this figure, the amount of torque (Y axis) is plotted as a function of time (X axis). As shown in this figure, ice protection system 120 turns on between time 15.0 and 15.25 (e.g., "IPS ON") and turns off between time 15.75 and 16.0 (e.g., "IPS OFF"). During the period where ice protection system 120 is turned on, the torque values observed by the mechanical drive system of aircraft 105 oscillate between approximately 500.0 and 1350. Similarly, during the period where ice protection system 120 is turned off, the torque values observed by the drive system of aircraft 105 oscillate between approximately -150 and 750. This oscillatory ringing in the drive system of aircraft 105 caused by ice protection system 120 turning on and off is undesirable and may cause various issues with aircraft 105 (e.g., shortened component life, unreliability, etc.). However, to address and prevent the oscillatory ringing in the drive system of aircraft 105 caused by ice protection system 120 turning on and off, as illustrated in FIGURE 2, system 100 utilizes load damping controller 110 to damp the electrical step load changes from ice protection system 120. To do so, load damping controller 110 is electrically coupled in series between electrical generator 130 and ice protection system 120. Load damping controller 110 damps the electrical step load changes from ice protection system 120 by, in certain embodiments, splitting the change in electrical load application by ice protection system 120 into two or more smaller steps with a time delay in between, as described in more detail below. As a result, component life and aircraft reliability may be increased.

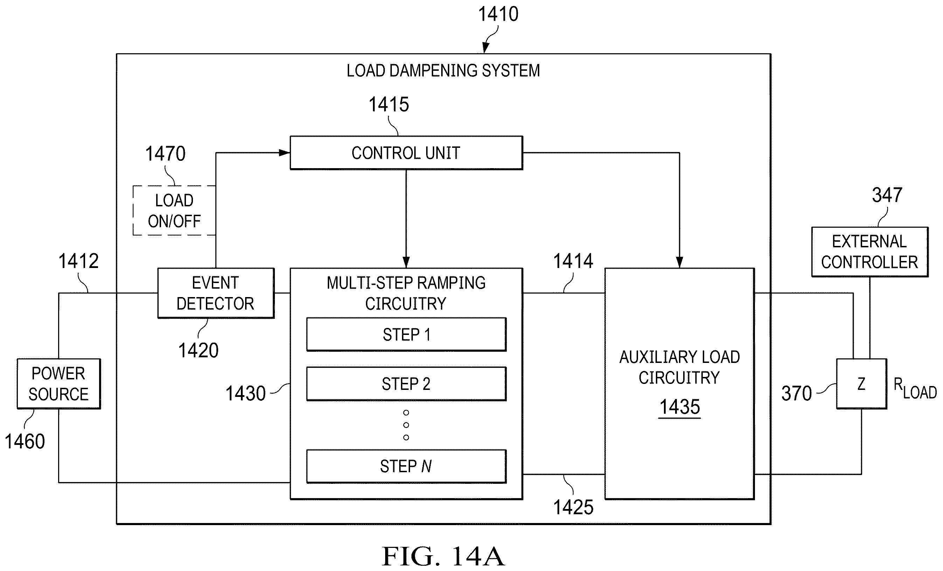

FIGURE 14A illustrates a load damping system 1410 that may be utilized by the system of FIGURE 1, according to certain embodiments. In embodiments, load damping system 1410 may be configured with functionality for damping an electrical load. In particular, load damping system 1410 may be configured with a multi-step configuration for ramping the power (e.g., up through the electrical load during a ramping up period and/or down through an auxiliary load during a ramping down period) over a plurality of ramping steps. For example, load damping system 1410 may be configured to increase (e.g., after detecting that the electrical load has been activated) the power supplied to the electrical load from zero to full power over a plurality of ramp-up steps during the ramping up period such that the power is increased by a fraction of the full power at each ramp-up step until full power is reached. Load damping system 1410 may be further configured to decrease (e.g., after detecting that the electrical load has been deactivated and rapidly replacing the electrical load with an auxiliary load) the power supplied to the auxiliary load from full power to zero over a plurality of ramp-down steps during the ramping down period such that the power is decreased by a fraction of the full power at each ramp-down step until zero power is reached.

As shown in FIGURE 14A, load damping system 1410 may include control unit 1415, event detector 1420, multi-step ramping circuitry 1430, and auxiliary load circuitry 1435. These components, and their individual components, may cooperatively operate to provide functionality in accordance with the discussion herein.

In embodiments, load damping system 1410 may be configured to be disposed between a power source 1460 and an electrical load 370. In embodiments, load damping system 1410 may be configured to provide load damping due to the sudden activation and/or removal of the electrical load 370 from the power source 1460. This load damping functionality may be advantageous as it may operate to reduce oscillatory loads or other undesirable characteristics in the mechanical system in which electrical load 370 and power source 1460 operate. For example, in aircraft applications, the load damping system 1410 may help minimize oscillatory torque responses in the drive system caused by sudden load changes from systems like ice protection system 120 as illustrated in FIGURE 1. By damping these load transients, load damping system 1410 may operate to improve component life and overall system reliability.

Electrical load 370 may be any device, system, or component that is configured to draw electrical power from power source 1460 and that may exhibit rapid changes in power consumption, such as due to being activated and/or deactivated. In some embodiments, electrical load 370 may be an ice protection system 120 as illustrated in FIGURE 1. Electrical load 370 may also include other aircraft systems such as avionics, lighting systems, or environmental control systems. In some embodiments, electrical load 370 may be a combination of multiple systems or components that collectively present a variable load to the power source. Electrical load 370 may be, in some embodiments, a non-aircraft system such as industrial equipment, power distribution networks, and/or any other system that experiences sudden changes in power demand (e.g., such as by being activated and/or deactivated). In embodiments, electrical load 370 may be controlled by external controller 347, which may manage activation and deactivation of electrical load 370. This external control of the electrical load 370 may mean that the power source 1460 and/or load damping system 1410 may not have control over when electrical load 370 is activated (e.g., attached to the power source 1460, turned on, etc.) and/or when electrical load 370 is deactivated (e.g., removed or shed from the power source 1460, turned off etc.).

Power source 1460 may be any suitable source of electrical power for supplying energy to electrical load 370. In some embodiments, power source 1460 may include an electrical generator, such as electrical generator 130 illustrated in FIGURE 1. In some embodiments, power source 1460 may also include other types of power generation or storage devices, such as batteries, fuel cells, solar panels, or power converters. In some embodiments, power source 1460 may be a combination of multiple power sources working together to meet the power demands of electrical load 370. In some embodiments, power source 1460 may be configured to provide AC or DC power, depending on the requirements of the system and electrical load 370.

Control unit 1415 may be configured to manage operations of the load damping system 1410. In some embodiments, control unit 1415 may include processing circuitry, memory, and/or software to execute various functions related to load damping system 1410. In embodiments, control unit 1415 may be implemented through a buffer or an amplifier. In some embodiments, control unit 1415 is purely an analog/digital circuit that does not include a microprocessor and does not execute any software. In other embodiments, control unit 1415may be a microprocessor that executes software stored in memory or any other appropriate integrated circuit (e.g., a field-programmable gate array (FPGA), application-specific IC (ASIC), a programmable logic device (PLD), and the like). Control unit 1415 may be configured to interface with other components of the load damping system 1410, such as event detector 1420, multi-step ramping circuitry 1430, and auxiliary load circuitry 1435.

In general, control unit 1415 may determine, such as leveraging the functionality of event detector 1412, that electrical load 370 has been activated, and then activates the plurality of ramping steps of multi-step ramping circuitry 1430, in a ramp-up sequence, in order to distribute the increase of the power applied to electrical load 370 during a ramping up period from zero to full power over a plurality of ramp-up steps of a predetermined duration. Control unit 1415 may also determine, such as leveraging the functionality of event detector 1412, that electrical load 370 has been deactivated, in which case, control unit 1415 may rapidly activate auxiliary load circuitry 1435 to rapidly replace electrical load 370 with an auxiliary load, and then deactivates the plurality of ramping steps of multi-step ramping circuitry 1430, in a ramp-down sequence, in order to distribute the decrease of the power applied to the auxiliary load during a ramping down period from full power to zero over a plurality of ramp-down steps of a predetermined duration.

Event detector 1420 may be configured to detect an activation event associated with electrical load 370. For example, in embodiments, event detector 1420 may be configured to detect when electrical load 370 has been activated (e.g., when electrical load 370 is turned on, engaged with power source 1460, and/or begins drawing power from power source 1460). Event detector 1420 may send signal 1470 to the control unit 1415 indicating that electrical load 370 has been activated. The control unit may determine that electrical load 370 has been activated based on the signal 1470 transmitted by the event detector. In some embodiments, event detector 1420 may be configured to detect when electrical load 1420 has been deactivated (e.g., when electrical load 370 is turned off, removed or shed from power source 1460, and/or stops drawing power from power source 1460). Event detector 1420 may send signal 1470 to the control unit 1415 with an indication that electrical load 370 has been deactivated. The control unit may determine that electrical load 370 has been deactivated based on the indication in signal 1470 transmitted by the event detector.

In embodiments, event detector 1420 may include a current sensing unit that is coupled to the power input node 1412. This current sensing unit may be configured to sense the electrical current flowing through power input node 1412, which may be indicative of the electrical current flowing through electrical load 370, and provide the sensed current to control unit 1415 via signal 1470. Control unit 1415 may determine whether electrical load 370 has been activated or deactivated based on the sensed current indication in signal 1470. For example, when electrical load 370 is activated (e.g., turned on or engaged from power source 1460), some current may flow through power input node 1412. In this case, the current sensing unit may sense the electrical current flowing through power input node 1412, and signal 1470 may indicate the amount of current sensed by the current sensing unit. In this case, control unit 1415 may compare the amount of current sensed by the current sensing unit against a predetermined threshold to determine whether electrical load 370 has been activated or not. For example, when control unit 1415 determines that the amount of current sensed by the current sensing has exceeded the predetermined threshold, control unit 1415 may determine that electrical load 370 has been activated. On the other hand, when control unit 1415 determines that the amount of current sensed by the current sensing has not exceeded the predetermined threshold, control unit 1415 may determine that electrical load 370 has not been activated.

In embodiments, when electrical load 370 is deactivated (e.g., turned off or disengaged from the power source 1460), no current flows through the power input node 1412 (e.g., assuming that the auxiliary load circuitry is not activated). In embodiments, such as after a determination that electrical load 370 has been activated, control unit 1415 may compare the amount of current sensed by the current sensing unit against the predetermined threshold to determine whether electrical load 370 has been deactivated or not. For example, when control unit 1415 determines that the amount of current sensed by the current sensing has fallen below the predetermined threshold (e.g., after having exceeded the predetermined threshold), control unit 1415 may determine that electrical load 370 has been deactivated. On the other hand, when control unit 1415 determines that the amount of current sensed by the current sensing has not fallen below the predetermined threshold, control unit 1415 may determine that electrical load 370 has not been deactivated.

Auxiliary load circuitry 1435 may be configured to rapidly replace electrical load 370 with an auxiliary load when electrical load 370 is removed or shed from power source 1460. For example, auxiliary load circuitry 1435 may be configured to replace electrical load 370 with an auxiliary load within a rapid threshold of time after detecting that electrical load 370 has been deactivated. In some embodiments, the rapid threshold of time may be any value less than five millisecond. For example, in a particular embodiment, auxiliary load circuitry 1435 may be configured to replace electrical load 370 with the auxiliary load within less than one millisecond of detecting that electrical load 370 has been deactivated. This rapid replacement of electrical load 370 with the auxiliary load enables load damping system to "catch" electrical load 370's shed from power source 1460, and to gradually ramp down the power across the auxiliary load to maintain system stability and prevent unwanted oscillations or other adverse effects in the power distribution system.

In embodiments, auxiliary load circuitry 1435 may include an auxiliary load resistor coupled to voltage output node 1414. The auxiliary load resistor of auxiliary load circuitry 1435 may have a load value corresponding to the value of the electrical load 370. For example, the load value of the auxiliary load resistor may be equal to or approximately equal to the load value of the electrical load 370, such as within + or - 10% of the load value of the electrical load 370.

Auxiliary load circuitry 1435 may also include an auxiliary load switch coupled in series with the auxiliary load resistor and ground node 1425 of load damping system 1410. In embodiments, the auxiliary load switch of auxiliary load circuitry 1435 may include any appropriate contactor or switch. For example, the auxiliary load switch may include a contactor switch, a solid-state relay, a transistor such as a field-effect transistor (FET), an insulated-gate bipolar transistor (IGBT), and/or any other suitable switching device.

In embodiments, auxiliary load circuitry 1435 may operate in conjunction with control unit 1415 to provide a rapid replacement of electrical load 370 with the auxiliary load when the electrical load 370 is deactivated. For example, when control unit 1415 detects that electrical load 370 has been deactivated, control unit 1415 may send a signal (e.g., within the rapid threshold of time after electrical load 370 has been detected as being deactivated) to close the auxiliary load switch, effectively replacing the electrical load 370 with the auxiliary load resistor of auxiliary load circuitry 1435.

In some embodiments, auxiliary load circuitry 1435 may also be configured to operate in cooperation with multi-step ramping circuitry 1430 during the ramping down period. For example, the power applied to the auxiliary load is gradually decreased through the ramp-down steps, the auxiliary load may continue to provide a load that mimics the characteristics of the original electrical load 370, allowing for a controlled ramp-down process.

Multi-step ramping circuitry 1430 may be configured to ramp the power (e.g., to ramp the power up and/or ramp the power down) provided by power source 1460 across electrical load 370 and/or auxiliary load circuitry 1435 over a plurality of steps. In embodiments, each ramping step of multi-step ramping circuitry 1430 is achieved by a parallel combination of a ramping resistor and a ramping switch. As such, each ramping step of multi-step ramping circuitry 1430 may be configured by a corresponding parallel combination of a ramping resistor and a ramping switch. In embodiments, each parallel combination of a ramping resistor and a ramping switch (e.g., each ramping step of multi-step ramping circuitry 1430) may be coupled in series to event detector 1420 and power output node 1412. In embodiment, a ramping switch of multi-step ramping circuitry 1430 may include a contactor switch, a solid-state relay, a transistor such as a FET, an IGBT, and/or any other suitable switching device.

It will be appreciated, and as discussed in more detail herein that the ramping steps of multi-step ramping circuitry 1430 may be utilized during both the ramping up period (e.g., for ramping up the power applied to electrical load 370) and the ramping down period (e.g., for ramping down the power applied to auxiliary load provided by auxiliary load circuitry 1435). In embodiments, during the ramping up period, the ramping steps may be activated in a ramp-up sequence and as such, may represent ramp-up steps. Conversely, during the ramping down period, the ramping steps may be deactivated in a ramp-down sequence and as such, may represent ramp-down steps. This functionality allows multi-step ramping circuitry 1430 to provide controlled power ramping in both directions, which may enhance the system's ability to manage sudden load changes and maintain stability.

It is noted that, in embodiments including a two-step configuration (e.g., where the power is to be ramped over two steps, such as two ramp-up steps from zero to full power and/or two ramp-down steps from full power to zero), multi-step ramping circuitry 1430 may include a single parallel combination of a ramping resistor and a ramping switch. In this two-step configuration, during the ramping up period, the power applied to electrical load 370 may be stepped up from zero to a first ramp-up step level (e.g., which may be half of the full power) during a first ramp-up step, and then, after a duration of the first ramp-up step has passed, the power may be stepped up to a full power level during a second ramp-up step. In this two-step configuration, during the ramping down period, the power applied to the auxiliary load may be stepped down from full power to a first ramp-down step level (e.g., which may be half of the full power) during a first ramp-down step, and then may be stepped down to zero during a second ramp-down step.

In embodiments including N steps, (e.g., where the power is to be ramped over *N* steps, such as *N* ramp-up steps from zero to full power and/or *N* ramp-down steps from full power to zero), multi-step ramping circuitry 1430 may include N-1 parallel combinations of a ramping resistor and a ramping switch may be used. This is because each parallel combinations of a ramping resistor and a ramping switch may operate to provide a step-up between zero and full power and/or a step-down between full power and zero. In these embodiments, the N-1 parallel combinations of multi-step ramping circuitry 1430 may themselves be in parallel combination with each other, such that the electrical current flowing though multi-step ramping circuitry 1430 may flow in parallel through each of the *N-1* parallel combinations of a ramping resistor and a ramping switch.

For example, in an *N*-step configuration, during the ramping up period, the power applied to electrical load 370 may be stepped up from zero to a first ramp-up step level (e.g., which may be based on the value of the ramping resistor of the first ramp-up step) during a first ramp-up step. After a duration of the first ramp-up step has passed, the power may be stepped up from the first ramp-up step level to a second ramp-up step level (e.g., which may be based on the value of the parallel combination of the ramping resistor of the first ramp-up step and the ramping resistor of the second ramp-up step) during a second ramp-up step. The process may continue until the power has been stepped up *N* times to full power. In this N-step configuration, during the ramping down period, the power applied to the auxiliary load may be stepped down from full power to a first ramp-down step level (e.g., which may be based on the value of the parallel combination of the ramping resistors of all the ramp-down steps minus the value of the ramping resistor of the first ramp-down step) during a first ramp-down step. After a duration of the first ramp-down step has passed, the power may be stepped down from the first ramp-down step level to a second ramp-down step level (e.g., which may be based on the value of the parallel combination of the ramping resistors of all the ramp-down steps minus the value of the ramping resistor of the first ramp-down step and the ramping resistor of the second ramp-down step) during a second ramp-down step. The process may continue until the power has been stepped down N times to zero.

For example, in embodiments, during operation of load damping system 1410, control unit 1415 may detect, e.g., leveraging the functionality of event detector 1420, that electrical load 370 has been activated (e.g., by external controller 347). For example, a current sensing unit may sense an electrical current flowing through power output node 1412 and may send the sensed current level to control unit 1415 via signal 1470. Control unit 1415 may determine, based on the signal 1470, that the electrical current flowing through electrical load 370 has exceeded a predetermined threshold. Control unit 1415 may activate, in response to detecting that electrical load 370 has been activated, a first ramp-up step of multi-step ramping circuitry 1430. In embodiments, activating the first ramp-up step of multi-step ramping circuitry 1430 may include directing the electrical current through the ramping resistor of every ramping step of multi-step ramping circuitry 1430. Directing the electrical current through the ramping resistor of every ramping step of multi-step ramping circuitry 1430 may have the effect of increasing the power supplied to the activated electrical load to the power level of the first ramp-up step, which may include a fraction of the full power corresponding to the full power as reduced by the parallel combination of the all the ramping resistors of multi-step ramping circuitry 1430. In embodiments, directing the electrical current through the ramping resistor of every ramping step of multi-step ramping circuitry 1430 during the first ramp-up step may include control unit 1415 sending an electrical signal to open each of the ramping switches of each ramping step preventing the electrical current from flowing through the ramping switches. In some implementations each of the ramping switches of each ramping step of multi-step ramping circuitry 1430 may already be open at this stage in which case no electrical signal is sent to open these ramping switches.

In a particular implementation with a single ramping step (e.g., in a two-step ramping configuration), activating the first ramp-up step of multi-step ramping circuitry 1430 may include directing the electrical current through the single ramping resistor of multi-step ramping circuitry 1430, which may be configured (e.g., may have a resistance value) to reduce the power applied to electrical load 370 to the first ramp-up step level. In embodiments, directing the electrical current through the single ramping resistor of multi-step ramping circuitry 1430 may include control unit 1415 sending an electrical signal to open the ramping switch of the single ramping step. In some implementations the ramping switches of the single ramping step of multi-step ramping circuitry 1430 may already be open in which case no electrical signal is sent to open this ramping switch.

In embodiments, control unit 1415 may be further configured to activate, after a predetermined amount of time after activating the first ramp-up step, a second ramp-up step of multi-step ramping circuitry 1430, which may include bypassing the ramping resistor of the first ramping step. In embodiments, bypassing the ramping resistor of a ramping step may include closing the ramping switch of the ramping step, which directs the electrical current through the ramping switch and not through the ramping resistor. For example, bypassing the ramping resistor of the first ramping step may include closing the ramping switch of the first ramping step. This may have the effect of increasing the power supplied to electrical load 370 to the power level of the second ramp-up step, which may include the full power reduced by the power reduction provided by the resistive value of the ramping resistor of the first ramping step that is now bypassed. That is, as the ramping resistor of the first ramp-up step is being bypassed, the ramping resistor of the first ramp-up step no longer reduces the full power applied to electrical load 370.

In a two-step implementation, the power level of the second step-up step may correspond to the full power provided by the power source 1460. In embodiments with N>2 ramp-up steps, the power level of the second step may correspond to a fraction of the full power corresponding to the full power as reduced by the parallel combination of the all the ramping resistors minus the ramping resistor of the first ramp-up step. In embodiments, each of the ramp-up steps of multi-step ramping circuitry 1430 may be activated (e.g., to close a corresponding ramping switch to bypass a corresponding ramping resistor) following the ramp-up sequence. Each subsequent ramp-up step in the ramp-up sequence is activated after a predetermined amount of time has passed after the activation of the ramp-up step in the ramp-up sequence. In embodiments, the ramp-up sequence may be followed until the last ramp-up step is activated (e.g., until the ramping resistor of the last ramp-up step is bypassed by closing the ramping switch of the last ramp-up step) at which stage every ramping resistor of multi-step ramping circuitry 1430 is bypassed providing full power to electrical load 370.

In embodiments, the predetermined amount of time between each ramp-up step activation may be configured to ensure that the subsequent step occurs at a point in time that minimizes the oscillatory response in the mechanical system. In this manner, the power supplied to electrical load 370 in response to the activation of electrical load 370 is ramped up from zero to full power over a plurality of ramp-up steps.

Control unit 1415 may be further configured to detect that electrical load 370 has been deactivated (e.g., by external controller 347), which effectively removes or sheds electrical load 370 from power source 1460. Control unit 1415 may be configured to rapidly respond to electrical load 370's deactivation to replace electrical load 370 with the auxiliary load provided by auxiliary load circuitry 1435. For example, in embodiments, control unit 1415 may activate auxiliary load circuitry 1435 within a rapid threshold of time from the detection of electrical load 370's deactivation to replace electrical load 370 with the auxiliary load. In embodiments, the rapid threshold of time may be any value less than five milliseconds (e.g., one millisecond in a particular embodiment).

In embodiments, activating auxiliary load circuitry 1435 may include control unit 1415 sending an electrical signal to close the auxiliary load switch of auxiliary load circuitry 1435. Closing the auxiliary load switch of auxiliary load circuitry 1435 may direct the electrical current through the auxiliary load resistor of auxiliary load circuitry 1435, and in this manner, the auxiliary load resistor of auxiliary load circuitry 1435 may operate as the auxiliary load. As noted above, the auxiliary load resistor of auxiliary load circuitry 1435 may have a load value corresponding to the value of the electrical load 370, such as a load value of that is equal to or approximately equal to the load value of electrical load 370, such as within + or - 10% of the load value of electrical load 370. In this manner, from the perspective of power source 1460, the auxiliary load resistor of auxiliary load circuitry 1435 is seen as the same as electrical load 370. In this manner, electrical load 370 is rapidly replaced with the auxiliary load through the auxiliary load resistor of auxiliary load circuitry 1435. It is noted that, at this stage, the ramping switches of all the ramping steps of multi-step ramping circuitry 1430 may be closed bypassing the ramping resistors of every ramping step of multi-step ramping circuitry 1430, and as such, full power continues to flow through power output node 1414. As such, at this stage, full power is applied to the auxiliary load.

Once the deactivated electrical load 370 has been replaced with the auxiliary load provided by auxiliary load circuitry 1435, control unit 1415 may operate to ramp down the power applied to the auxiliary load over the plurality of ramp-down steps. In embodiments, control unit 1415 may ramp down the power applied to the auxiliary load during the ramping down period over the plurality of ramp-down steps by deactivating the ramp-down steps in a ramp-down sequence configured to gradually step down the power applied to the auxiliary load from full power to zero over the plurality of ramp-down steps.

For example, in embodiments, control unit 1415 may deactivate a first ramp-down step of multi-step ramping circuitry 1430. Deactivating the first ramp-down step of multi-step ramping circuitry 1430 may include directing the electrical current through the ramping resistor of the first ramp-down step (e.g., the ramping resistor of the parallel combination of a ramping resistor and a ramping switch corresponding to the first ramp-down step). As the electrical current may currently be bypassed from the ramping resistors of the remaining ramp-down steps (e.g., for implementations with N>2 ramp-down steps, but not for two ramp-down steps implementations in which there are no remaining ramping resistors), directing the electrical current through the ramping resistor of the first ramp-down step may have the effect of decreasing the power applied to the auxiliary load from full power to the power level of the first ramp-down step, which may include a fraction of the full power corresponding to the full power as reduced by the ramping resistor of the first ramp-down level. In embodiments, directing the electrical current through the ramping resistor of the first ramp-down step may include sending an electrical signal to open the ramping switch of the first ramp-down step (e.g., the ramping switch of the parallel combination of the ramping resistor and the ramping switch corresponding to the first ramp-down step) to cease bypassing the ramping resistor of the first ramp-down step.

In embodiments, control unit 1415 may be further configured to activate, after a predetermined amount of time after activating the first ramp-down step, a second ramp-down step. In two-step implementations, activating the second ramp-down step may include decreasing the power applied to the auxiliary load to zero, which may be accomplished by control unit 1415 sending an electrical signal to open the auxiliary load switch of auxiliary load circuitry 1435 effectively cutting off the auxiliary load resistor from the electrical current path and stopping the electrical current from flowing through the auxiliary load resistor of auxiliary load circuitry 1435. At this stage of the two-step implementation, the ramping down period may end as the ramp down of the power through the auxiliary load to zero is complete.

In embodiments with N>2 ramp-down steps, activating the second ramp-down step may include directing the electrical current through the parallel combination of the ramping resistor of the first ramp-down step and the ramping resistor of the second ramp-down step of multi-step ramping circuitry 1430. As the electrical current may currently be bypassed from the ramping resistors of the remaining ramping steps (e.g., other than the first and second ramp-down steps), directing the electrical current through the parallel combination of the ramping resistor of the first ramp-down step and the ramping resistor of the second ramp-down step may have the effect of decreasing the power supplied to the auxiliary load further down to the power level of the second ramp-down step, which may include a fraction of the full power corresponding to the full power as reduced by the parallel combination of the ramping resistor of the first ramp-down step and the ramping resistor of the second ramp-down step.

In embodiments, activating a subsequent ramp-down step may have the effect of including the ramping resistor of the subsequent ramp-down step into the parallel combination of the ramping resistors of all the prior activated ramp-down steps. In embodiments, each of the ramp-down steps of multi-step ramping circuitry 1430 may be activated, after a predetermined amount of time between each ramp-down step activation, until the electrical current is directed to the parallel combination of every ramping resistor (e.g., by opening the ramping switch of every ramp-up step). At this stage, the power applied to the auxiliary load may at the lowest ramp-down level above the last ramp-down step (e.g., above zero). At this stage, control unit 1415 may activate the last ramp-down step by decreasing the power applied to the auxiliary load to zero, which may be accomplished by control unit 1415 sending an electrical signal to open the auxiliary load switch of auxiliary load circuitry 1435 effectively cutting off the auxiliary load resistor from the electrical current path and stopping the electrical current from flowing through the auxiliary load resistor of auxiliary load circuitry 1435. At this stage of the N-ramp-down-step implementation, the ramping down period may end as the ramp down of the power through the auxiliary load to zero is complete.

In embodiments, the predetermined amount of time between each ramp-down step activation may be configured to ensure that each subsequent ramp-down step occurs at a point in time that minimizes the oscillatory response in the mechanical system. In this manner, the power supplied to the auxiliary load provided by auxiliary load circuitry 1435 in response to the deactivation of electrical load 370 is ramped down from full power to zero over a plurality of ramp-down steps.

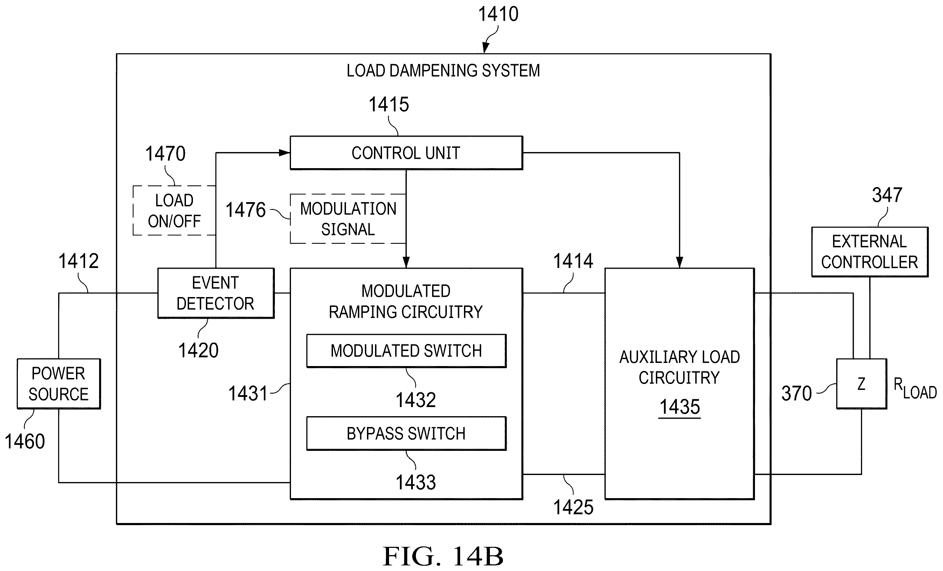

FIGURE 14B illustrates another configuration of load damping system 1410 that may be utilized by the system of FIGURE 1, according to certain embodiments. In particular, the configuration of load damping system 1410 illustrated in FIGURE 14B may be configured with a modulated ramping configuration for ramping the power (e.g., up through the electrical load during a ramping up period and/or down through an auxiliary load during a ramping down period) by modulating the ramping of the power applied to the electrical load and/or the auxiliary load based on a function of time until full power is reached using a modulation signal (e.g., a PWM signal configured to control a change of a duty cycle of a modulation switch associated with a modulated ramping circuitry). For example, load damping system 1410 may be configured to modulate an increase (e.g., after detecting that the electrical load has been activated) of the power applied to the electrical load from zero to full power based on a function of time using a modulation signal. In embodiments, the load damping system 1410 may be configured to modulate a decrease (e.g., after detecting that the electrical load has been deactivated and rapidly replacing the electrical load with an auxiliary load) of the power applied to the electrical load from zero to full power based on a function of time using a modulation signal. In embodiments, the function of time may be linear, exponential, logarithmic, stepwise, etc., and the modulation of the increase of the power during the ramping up period and/or the decrease of the power during the ramping down period may be based on a PWM signal configured to control an increase and/or decrease of the duty cycle of the modulation switch associated with the modulated ramping circuitry.

As shown in FIGURE 14B, load damping system 1410 may include control unit 1415, event detector 1420, modulated ramping circuitry 1431, and auxiliary load circuitry 1435. These components, and their individual components, may cooperatively operate to provide functionality in accordance with the discussion herein.

In embodiments, load damping system 1410 may be configured to operate similarly to the operations of load damping system 1410 as illustrated and discussed with respect to the FIGURE 14A. For example, load damping system 1410 as illustrated in FIGURE 14B may be configured to be disposed between a power source 1460 and an electrical load 370, and may be configured to provide load damping due to the sudden activation and/or removal of the electrical load 370 from the power source 1460. In embodiments, electrical load 370 and power source 1460 may include functionality as described above with respect to FIGURE 14A.

Control unit 1415 may be configured to manage operations of the load damping system 1410, as described above with reference to FIGURE 14B. In particular, control unit 1415 may be to determine when electrical load 370 has been activated and/or deactivated, and to rapidly activate the auxiliary load of auxiliary load circuitry 1435 by activating the auxiliary load switch of auxiliary load circuitry 1435 in response to the electrical load being deactivated (e.g., being shed or removed) to replace electrical load 370 with the auxiliary load provided by the auxiliary load resistor of auxiliary load circuitry 1435. In embodiments, control unit 1415 may be configured to control operations of modulated ramping circuitry 1431 by sending modulation signal 1476 to modulated switch 1432 of modulated ramping circuitry 1431 to control the duty cycle of modulated switch 1432 in order to control the ramping of the power provided by power source 1460 to electric load 370 and/or the auxiliary load.

In general, control unit 1415 may determine, such as leveraging the functionality of event detector 1412, that electrical load 370 has been activated, and may then send modulation signal 1476 to modulated switch 1432 of modulated ramping circuitry 1430 to gradually increase the duty cycle of modulated switch 1432 from 0 to 100% to increase the power applied to electrical load 370 from zero to full power based on a function of time. In embodiments, a duty cycle of 0% may correspond to no power being applied to electrical load 370 as a duty cycle of 0% may allow no current to flow through modulated ramping circuitry 1431 and/or through electrical load 370, while a duty cycle of 100% may correspond to full power being applied to electrical load 370, as a duty cycle of 100% may allow a maximum current to flow through modulated ramping circuitry 1431 and/or through electrical load 370. Duty cycles between 0 and 100% may correspond to a corresponding fraction of the full power.

In some optional embodiments, once full power has been reached (e.g., once the duty cycle of modulated switch 1432 has reached 100%), control unit 1415 may close bypass switch 1433 to direct the electrical current through bypass switch 1433, enabling modulated switch 1432 to be turned off or closed while maintaining full power through electrical load 370 (e.g., through the bypass switch 1433).

Control unit 1415 may also determine, such as leveraging the functionality of event detector 1412, that electrical load 370 has been deactivated, in which case, control unit 1415 may rapidly activate auxiliary load circuitry 1435 to rapidly replace electrical load 370 with an auxiliary load, and may then send modulation signal 1476 to modulated switch 1432 of modulated ramping circuitry 1430 to gradually decrease the duty cycle of modulated switch 1432 from 100% to 0 to decrease the power applied to the auxiliary load from full power to zero based on a function of time. In some optional embodiments, before the power applied to the auxiliary load is ramped down, control unit 1415 may open bypass switch 1433 to direct the electrical current through modulated switch 1432.

Event detector 1420 may be configured to detect an activation event associated with electrical load 370. In embodiments, the functionality of event detector 1420 may be as described with reference to FIGURE 14B. For example, in embodiments, event detector 1420 may be configured to detect when electrical load 370 has been activated (e.g., when electrical load 370 is turned on, engaged with power source 1460, and/or begins drawing power from power source 1460), to detect when electrical load 1420 has been deactivated (e.g., when electrical load 370 is turned off, removed or shed from power source 1460, and/or stops drawing power from power source 1460), and to send respective indications to control unit 1415 in signal 1470, and/or to sense a current flowing through power input node 1412 which may be indicative of whether electrical load 370 has been activated and/or deactivated and to send the sensed current to control unit 1415 for activation or deactivation determination.

Auxiliary load circuitry 1435 may be configured to rapidly replace electrical load 370 with an auxiliary load when electrical load 370 is removed or shed from power source 1460. In embodiments, the functionality of event detector 1420 may be as described with reference to FIGURE 14B. For example, auxiliary load circuitry 1435 may be configured to replace electrical load 370 with an auxiliary load within a rapid threshold of time after detecting that electrical load 370 has been deactivated. In some embodiments, the auxiliary load is provided by an auxiliary load resistor of auxiliary load circuitry 1435, and an auxiliary load switch of auxiliary load circuitry 1435 may be configured to direct the electrical current through the auxiliary load resistor to activate auxiliary load circuitry 1435.

Modulated ramping circuitry 1431 may be configured to modulate the ramping of the power (e.g., to ramp the power up and/or ramp the power down) provided by power source 1460 across electrical load 370 and/or auxiliary load circuitry 1435 based on a function of time using modulation signal 1476. In embodiments, modulation signal may include a PWM signal configured to control the duty cycle of modulated switch 1432. In embodiments, modulated switch 1432 may be coupled to power output node 1414 and the electrical current of the power provided to electrical load 370 and the auxiliary load through the power output node 141 may flow through modulated ramping circuitry 1431. In this manner, changing the duty cycle of modulated switch 1432 may change the amount of current flowing through the power output node 141 and consequently the amount of power applied to electrical load 370 and the auxiliary load. By controlling the duty cycle of modulated switch 1432, control unit 1414 is configured to modulate the increase of the power applied to the electrical load 370 during the ramping up period (e.g., in response to the activation of electrical load 370) to increase the power gradually from zero to full power based on the function of time by increasing the duty cycle of modulated switch 1432 from 0 to 100% gradually, and to modulate the decrease of the power applied to the auxiliary load during the ramping down period (e.g., in response to the deactivation of electrical load 370 and after rapid replacement of electrical load 370 with the auxiliary load) to decrease the power gradually from full power to zero based on the function of time by decreasing the duty cycle of modulated switch 1432 from 100% to 0 gradually. In embodiments, the function of time may be linear, exponential, logarithmic, stepwise, etc. In embodiments, bypass switch 1433 may operate to provide a path for the electrical current to bypass modulated switch 1432 allowing modulated switch 1432 to be turned off after reaching 100% duty cycle to maintain full power to electrical load 370.

In embodiment, modulated switch 1432 and/or bypass switch 1433 of modulated ramping circuitry 1431 may include a contactor switch, a solid-state relay, a transistor such as a FET, an IGBT, and/or any other suitable switching device. In some embodiment, modulated switch 1432 and bypass switch 1433 may be interchangeable. For example, for low power systems, modulated switch 1432 may be used and modulated to full power, potentially eliminating the need for bypass switch 1433 to maintain full power across electrical load 370. This configuration may be suitable for both ramping up and ramping down power. In high-power systems, bypass switch 1433 may be utilized to allow full power current to flow through it, which may protect modulated switch 1432 if it is implemented as a transistor. In certain high-power implementations, bypass switch 1433 may be configured to modulate the ramp up and/or ramp down periods, potentially eliminating the need for modulated switch 1432.

In embodiments, during operation of load damping system 1410, control unit 1415 may detect, e.g., leveraging the functionality of event detector 1420, that electrical load 370 has been activated (e.g., by external controller 347). For example, a current sensing unit may sense an electrical current flowing through power output node 1412 and may send the sensed current level to control unit 1415 via signal 1470. Control unit 1415 may determine, based on the signal 1470, that the electrical current flowing through electrical load 370 has exceeded a predetermined threshold.

Control unit 1415 may send, in response to detecting that electrical load 370 has been activated, modulation signal 1476 to modulated switch 1432 of modulated ramping circuitry 1431 to begin gradually increasing the duty cycle of modulated switch 1432 from 0 to 100%. In embodiments, as the duty cycle of modulated switch 1432 increases, the electrical current flowing through modulated switch 1432 also increases, and so does the power applied to electrical load 370 through power output node 1414. For example, with a duty cycle of 0%, no electrical current may flow through modulated switch 1432 and so no power is applied to electrical load 370. As the duty cycle is gradually increased (e.g., using modulation signal 1476) to some percentage higher than 0 but less than 100%, some electrical current flows through modulated switch 1432 and so some power is applied to electrical load 370. The duty cycle of modulated switch 1432 continues to be gradually increased (e.g., using modulation signal 1476), and so the electrical current flowing through modulated switch 1432 also increases and so does the power applied to electrical load 370. When the duty cycle of modulated switch 1432 reaches 100%, a maximum amount of electrical current flows through modulated switch 1432 and at this stage, the power applied to electrical load 370 has reached full power.

In embodiments, the relationship between the duty cycle of modulated switch 1432 and the amount of power applied to electrical load 370 may be based on the function of time. The function of time may be linear, in which a duty cycle of a given percentage may result in an amount of power applied to electrical load 370 that is a percentage of full power equal to the given percentage of the duty cycle. In some embodiments, the function of time may not be linear, in which case the correspondence between the duty cycle of modulated switch 1432 and the amount of power applied to the electrical load may not be linear, and may instead follow the non-linear function. In some embodiments, the function of time may be stepwise function, in which the modulation of the ramping of the power is stepwise over a plurality of steps in which, at each step, the duty cycle of the modulated switch 1432 is increased or decreased to increase or decrease the power provided to electrical load 370 and/or the auxiliary load by a fraction of the full power until reaching full power (e.g., for ramp-up) or zero (e.g., for ramp-down).

In some embodiments, once full power has been reached (e.g., once the duty cycle of modulated switch 1432 has reached 100%), control unit 1415 may send an electrical signal to close bypass switch 1433 to direct the electrical current through bypass switch 1433. This may operate to bypass modulated switch 1432, which may allow modulated switch 1432 to be turned off or closed, while maintaining full power through electrical load 370 (e.g., through the bypass switch 1433).

Control unit 1415 may be further configured to detect that electrical load 370 has been deactivated (e.g., by external controller 347), which effectively removes or sheds electrical load 370 from power source 1460. Control unit 1415 may be configured to rapidly respond to electrical load 370's deactivation to replace electrical load 370 with the auxiliary load provided by auxiliary load circuitry 1435. For example, in embodiments, control unit 1415 may activate auxiliary load circuitry 1435 within a rapid threshold of time from the detection of electrical load 370's deactivation to replace electrical load 370 with the auxiliary load. In embodiments, the rapid threshold of time may be any value less than five milliseconds (e.g., one millisecond in a particular embodiment).

In embodiments, activating auxiliary load circuitry 1435 may include control unit 1415 sending an electrical signal to close the auxiliary load switch of auxiliary load circuitry 1435. Closing the auxiliary load switch of auxiliary load circuitry 1435 may direct the electrical current through the auxiliary load resistor of auxiliary load circuitry 1435, and in this manner, the auxiliary load resistor of auxiliary load circuitry 1435 may operate as the auxiliary load. As noted above, the auxiliary load resistor of auxiliary load circuitry 1435 may have a load value corresponding to the value of the electrical load 370, such as a load value of that is equal to or approximately equal to the load value of electrical load 370, such as within + or - 10% of the load value of electrical load 370. In this manner, from the perspective of power source 1460, the auxiliary load resistor of auxiliary load circuitry 1435 is seen as the same as electrical load 370. In this manner, electrical load 370 is rapidly replaced with the auxiliary load through the auxiliary load resistor of auxiliary load circuitry 1435. It is noted that, at this stage, the electrical current of the full power may be flowing through the bypass switch 1433 and/or modulated switch at 100% duty cycle, and as such, full power continues to flow through power output node 1414. As such, at this stage, full power is applied to the auxiliary load.

Once the deactivated electrical load 370 has been replaced with the auxiliary load provided by auxiliary load circuitry 1435, control unit 1415 may operate to ramp down the power applied to the auxiliary load. For example, control unit 1415 may send, in response to detecting that electrical load 370 has been deactivated, modulation signal 1476 to modulated switch 1432 of modulated ramping circuitry 1431 to begin gradually decreasing the duty cycle of modulated switch 1432 from 100% to 0. In embodiments where bypass switch was activated to bypass modulated switch 1432, control unit 1415 may send an electrical signal to open bypass switch 1433 allowing the current to flow through modulated switch 1432.

In embodiments, as the duty cycle of modulated switch 1432 decreases, the electrical current flowing through modulated switch 1432 also decreases, and so does the power applied to electrical load 370 through power output node 1414. For example, with a duty cycle of 100%, a maximum amount of electrical current flows through modulated switch 1432 and at this stage, the power applied to electrical load 370 is full power. As the duty cycle is decreased (e.g., using modulation signal 1476) to some percentage lower than 100% but higher than 0%, the electrical current flowing through modulated switch 1432 decreases and so the power applied to electrical load 370 also decreases. Gradually, the duty cycle of modulated switch 1432 is decreased down to 0% (e.g., using modulation signal 1476), at which stage, no electrical current may flow through modulated switch 1432 and so no power is applied to electrical load 370. At this state, the power applied to electrical load 370 has reached zero.

FIGURE 3 illustrates a load damping controller 310 that may be utilized by system 100 of FIGURE 1 as load damping controller 110, according to certain embodiments. In some embodiments, load damping controller 310 includes a control unit 315, a current sensing unit 320, a ramp-up resistor 330, a ramp-down resistor 335, a first switch 340, and a third switch 350. In embodiments, the ramp-up resistor 330 may include functionality similar to the ramping resistors described with respect to FIGURES 14A and 14B, the ramp-down resistor 335 may include functionality similar to the auxiliary load resistor described with respect to FIGURES 14A and 14B, the first switch 340 may include functionality similar to the ramping switches described with respect to FIGURES 14A and 14B, and the third switch 340 may include functionality similar to the auxiliary load switch described with respect to FIGURES 14A and 14B. Load damping controller 310 includes a voltage input node 312 that is coupled to a voltage source 360, a voltage output node 314 that may be selectively coupled to an electrical load 370 via second switch 345 (e.g., under control of external controller 347), and a ground node 325 that is coupled to voltage source 360 and electrical load 370 as illustrated.

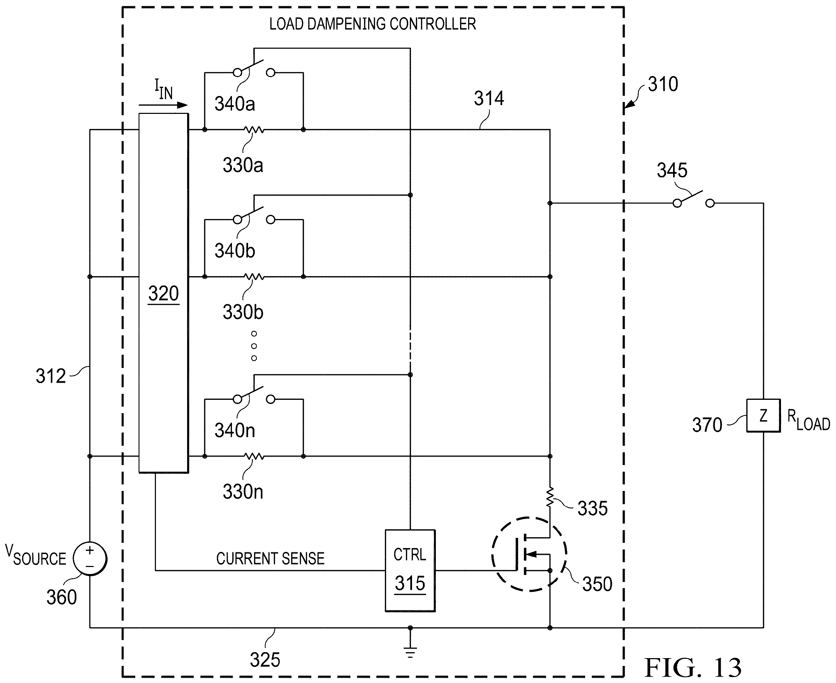

It is noted that the configuration of load damping controller 310 illustrated in FIGURE 3 may correspond to a two-step configuration as described with reference to FIGURE 14A. For example, load damping controller 310 as illustrated in FIGURE 3 may include a single ramping step configured by the parallel combination of first switch 340 and ramp-up resistor 330. FIGURE 13 illustrates another configuration of load damping controller 310 with an N-step configuration for load damping. The load damping controller 310 as illustrated in FIGURE 13 may include N ramping steps, each ramping step configured by a corresponding parallel combination of a switch 340 and a ramp-up resistor 330.

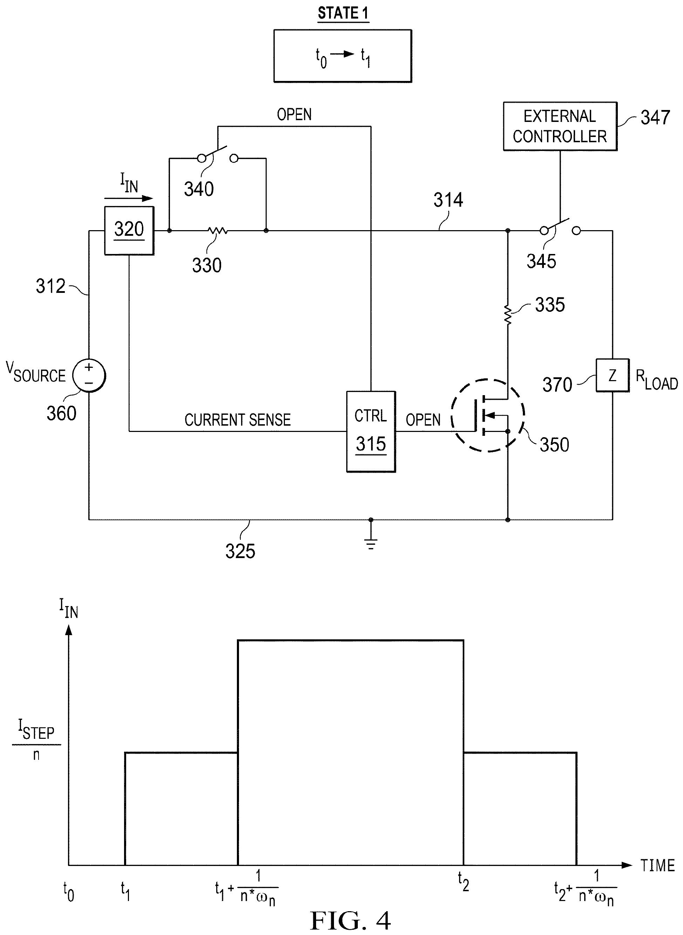

With reference to FIGURE 3, control unit 315 is electrically coupled to current sensing unit 320, first switch 340, and third switch 350, as illustrated. In embodiments, control unit 315 may be implemented through a buffer or an amplifier. In some embodiments, control unit 315 is purely an analog/digital circuit that does not include a microprocessor and does not execute any software. In other embodiments, control unit 315 may be a microprocessor that executes software stored in memory or any other appropriate integrated circuit (e.g., an FPGA, an ASIC, a PLD, and the like). In general, control unit 315 senses, using current sensing unit 320, that an electrical current caused by electrical load 370 has exceeded a predetermined threshold and then controls switches 340, 345, and 350 in order to split the change in electrical load application by electrical load 370 into two or more smaller steps with a time delay in between. More details about the operation of control unit 315 are described below in reference to FIGURES 4-7.

Current sensing unit 320 may be configured to detect activation of the electrical load 370. For example, in embodiments, current sensing unit 320 may be configured to sense an electrical current (e.g., "I_{IN}") flowing into load damping controller 310 from voltage source 360. In some embodiments, current sensing unit 320 may include a shunt resistor, whose value may be based on system and/or operational requirements. In a particular embodiment, the shunt resistor of the current sensing unit 320 may be 1 mΩ and may be electrically coupled to voltage input node 312 and ramp-up resistor 330 as illustrated (e.g., the shunt resistor is coupled inline/in series between voltage input node 312 and ramp-up resistor 330). In some embodiments, current sensing unit 320 may additionally include an amplifier (e.g., a current-sense amplifier, a differential amplifier, etc.) that is coupled to both sides of the shunt resistor and to control unit 315 in order to sense the current through the shunt resistor. In other embodiments, current sensing unit 320 may include any other appropriate device or sensor for sensing electrical current (e.g., a Hall effect sensor, etc.).

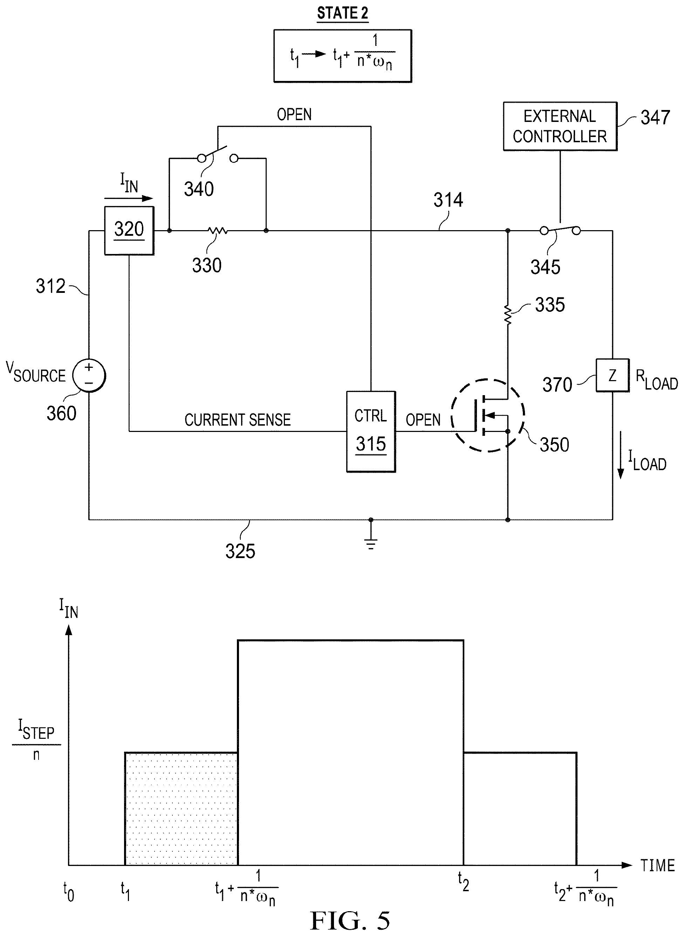

Ramp-up resistor 330 is any appropriately-sized resistor for limiting current flow to electrical load 370 during a ramp-up period (e.g., as illustrated in FIGURE 5). For example, if ice protection system 120 draws between 500 and 2,000 Watts, ramp-up resistor 330 may be 3.75 Ω. Ramp-up resistor 330 is electrically coupled to voltage input node 312 (e.g., through current sensing unit 320) and voltage output node 314.

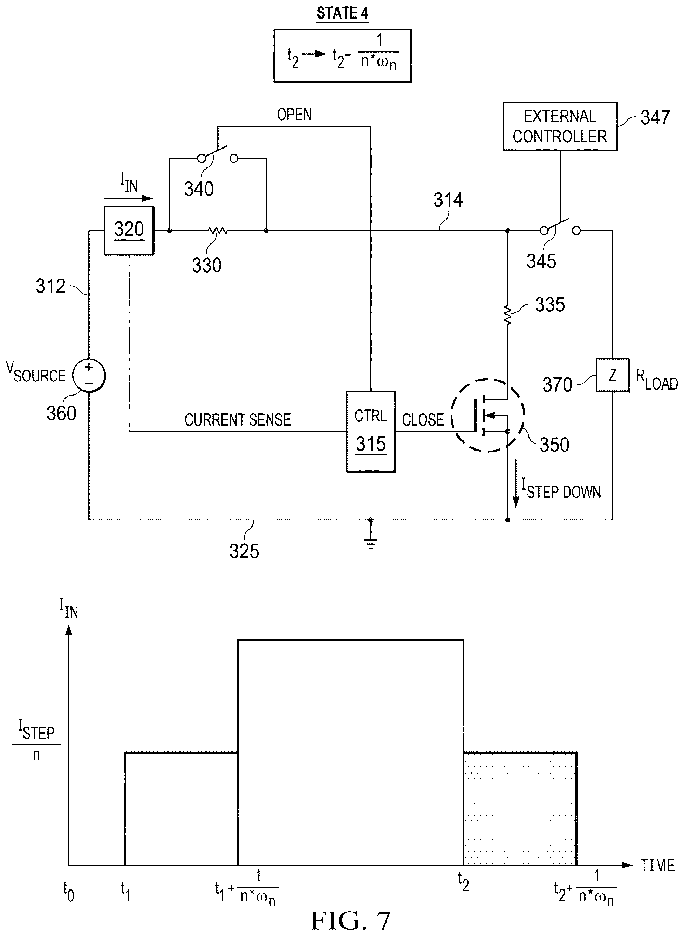

Ramp-down resistor 335 is any appropriately-sized resistor for limiting current flow to electrical load 370 during a ramp-down period (e.g., as illustrated in FIGURE 7). In embodiments, the ramp-down resistor 335 may have a value that is equal or approximately equal (e.g., within + or - 10%) to the value of the electrical load. For example, ramp-down resistor 335 may be 2.5 Ω when the electrical load 370 has a value equal or approximately equal to of 2.5 Ω. Ramp-down resistor 335 is electrically coupled to voltage output node 314 and selectively to ground node 325 through third switch 350.

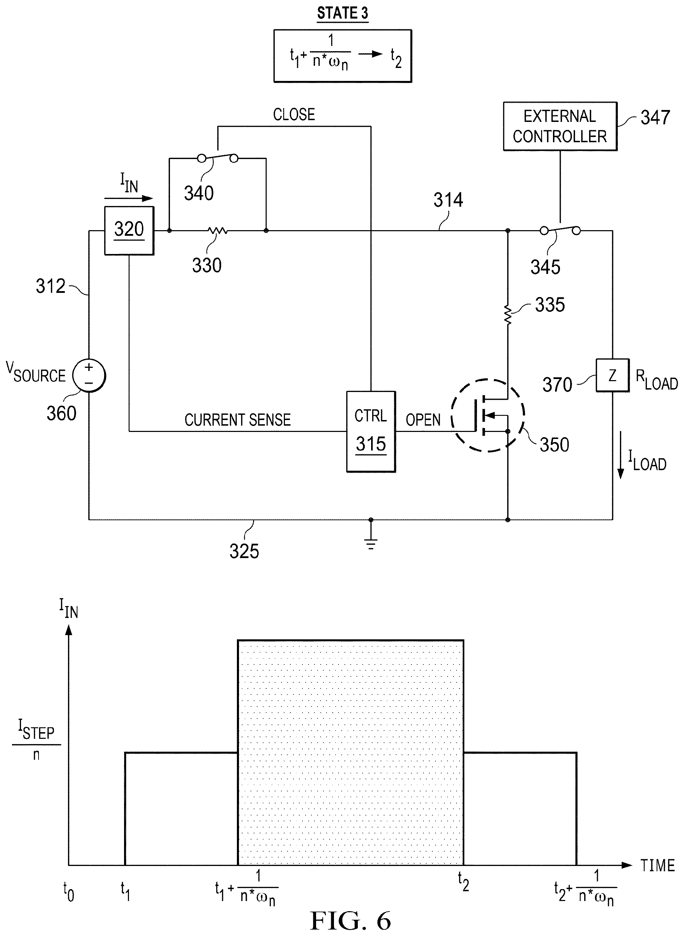

Load damping controller 310 may include one or more switches for damping electrical loads as described herein. In some embodiments, load damping controller 310 includes first switch 340 and third switch 350. First switch 340 is electrically coupled in parallel to ramp-up resistor 330 and is utilized by load damping controller 110 to selectively short out ramp-up resistor 330 (e.g., as illustrated in FIGURE 6). Second switch 345 is electrically coupled between voltage output node 314 and electrical load 370 and is used to selectively couple electrical load 370 to voltage output node 314 (e.g., under control of external controller 347). Third switch 350 is electrically coupled between ramp-down resistor 335 and ground node 325. Switches 340, 345, and 350 may be any appropriate contactor or switch (e.g., a solid-state relay, a transition, such as a field-effect transistor (FET), an insulated-gate bipolar transistor (IGBT), etc.).

Voltage source 360 is any appropriate DC or AC voltage source. In some embodiments, voltage source 360 is a generator such as electrical generator 130 of system 100. The voltage level from voltage source 360 varies by application, and load damping controller 310 may be utilized with any voltage level from any voltage source 360.

Electrical load 370 is any device, component, system, and the like that generates electrical step load changes (i.e., instantaneous or near-instantaneous application and removal of an electrical load) when turning on or off (e.g., such as described herein with respect to ice protection system 120). Electrical load 370 is selectively coupled to load damping controller 310 via second switch 345 (e.g., under control of external controller 347). Electrical load 370 may draw any appropriate amount of current.

In operation, and in reference to FIGURES 3-7, load damping controller 310 splits the change in electrical load application by electrical load 370 into two or more smaller steps with a time delay in between. The length of the time delay is predetermined as a function of the mechanical system natural frequency, ωₙ, so that successive steps occur at a point in time that minimizes the oscillatory response in the mechanical system. More specifically, and as illustrated in FIGURES 4-7 for the case of a two-step controller, the different operation time periods of load damping controller 310 may be split into four specific states: STATE 1 (FIGURE 4), STATE 2 (FIGURE 5), STATE 3 (FIGURE 6), and STATE 4 (FIGURE 7). These states and figures will now be described in more detail below. While these figures illustrate four specific states, it should be understood that other embodiments may include less or more states, and some embodiments may repeat one or more of these states as desired or required by operational requirements. In one particular embodiment, operation of load damping controller 310 may progress successively from STATE 1 to STATE 2 to STATE 3 to STATE 4 and then returns to STATE 1.

As illustrated in FIGURE 4, STATE 1 of load damping controller 310 occurs between time *t*₀ and *t*₁ when no current is being drawn by electrical load 370 (e.g., indicated by second switch 345 being open to indicate that electrical load 370 is not yet activated and/or drawing power from voltage source 360). During STATE 1, control unit 315 controls or otherwise ensures that first switch 340 is open, and third switch 350 is open. For example, control unit 315 may send electrical signals to each of first switch 340 and third switch 350 to operate the switches to the position indicated. In STATE 1, control unit 315 monitors current sensing unit 320 to determine if the electrical current I_{IN} into voltage input node 312 meets or exceeds a predetermined threshold. For example, in some embodiments, the predetermined threshold may be a value between 5 and 45 amperes. When control unit 315 determines that the electrical current I_{IN} into voltage input node 312 meets or exceeds the predetermined threshold, load damping controller 310 moves into STATE 2 described below.

As illustrated in FIGURE 5, STATE 2 of load damping controller 310 occurs between time *t*₁ and time ${t}_{1} + \frac{1}{n ∗ {ω}_{n}}$, where n is the number of load steps implemented by load damping controller 310 from 2 to ∞, and ωₙ is the natural frequency of the mechanical system excited by the change in electrical load. During STATE 2, switch 345 may be closed to indicate that electrical load 360 has been activated and is now drawing power from voltage source 360. During STATE 2, the amount of power supplied to electrical load 370 is reduced as illustrated in FIGURE 5. In this example, the current is reduced by half during STATE 2 (e.g., n is two in this example) from the power demand. To reduce the amount of power delivered to electrical load 370 during STATE 2, control unit 315 controls or otherwise ensures that first switch 340 is open and third switch 350 is open between time *t*₁ and time ${t}_{1} + \frac{1}{n ∗ {ω}_{n}}$. For example, control unit 315 may send electrical signals to each of first switch 340 and third switch 350 to operate the switches to the position indicated. This forces the electrical current through ramp-up resistor 330, thereby reducing the current supplied to electrical load 370. Load damping controller 310 remains in STATE 2 until the time reaches ${t}_{1} + \frac{1}{n ∗ {ω}_{n}}$. At time ${t}_{1} + \frac{1}{n ∗ {ω}_{n}}$, load damping controller 310 transitions to STATE 3 described below.

As illustrated in FIGURE 6, STATE 3 of load damping controller 310 occurs between time ${t}_{1} + \frac{1}{n ∗ {ω}_{n}}$ and time *t*₂. In embodiments, *t*₂ may be defined by the time during which the controller detects a step down in load demand across electrical load 370. During STATE 3, a full amount of power is supplied to electrical load 370 as illustrated in FIGURE 6 due to ramp-up resistor 330 being shorted/bypassed by first switch 340 (e.g., the desired amount of power from electrical load 370 is supplied through load damping controller 310 and is not reduced by load damping controller 310). To deliver the full amount of power required by electrical load 370 during STATE 3, control unit 315 controls or otherwise ensures that first switch 340 is closed and third switch 350 is open between time ${t}_{1} + \frac{1}{n ∗ {ω}_{n}}$ and time *t*₂. For example, control unit 315 may send electrical signals to each of first switch 340 and third switch 350 to operate the switches to the position indicated. This forces the electrical current to bypass ramp-up resistor 330, thereby delivering the full amount of current required by electrical load 370. During STATE 3, switch 345 may be closed. Load damping controller 310 remains in STATE 3 until the time reaches *t*₂. At time *t*₂, load damping controller 310 transitions to STATE 4 described below.

As illustrated in FIGURE 7, STATE 4 of load damping controller 310 occurs between time *t*₂ and time ${t}_{2} + \frac{1}{n ∗ {ω}_{n}}$. From a general operational perspective, during STATE 4, electrical load 370 is effectively removed (e.g., as indicated by second switch 345 being open) and, in response to the removal of the electrical load 370, electrical load 370 is replaced with an auxiliary electrical load generated by the electrical current flowing through ramp-down resistor 335 and third switch 350, and first switch 340 is opened to reduce the auxiliary electrical load by approximately half. For example, during STATE 4, the power demand across electrical load 370 drops but the change in power supplied to electrical load 370 is half of the drop in power demand, as illustrated in FIGURE 7 (e.g., n is two in this example). To cut the reduction in power delivered to electrical load 370 in half during STATE 4, control unit 315 controls or otherwise ensures that first switch 340 is open and third switch 350 is closed between time *t*₂and time ${t}_{2} + \frac{1}{n ∗ {ω}_{n}}$ . For example, control unit 315 may send electrical signals to each of first switch 340 and third switch 350 to operate the switches to the position indicated. This forces the electrical current through ramp-down resistor 335, thereby reducing the current supplied to electrical load 370. Load damping controller 310 remains in STATE 4 until the time reaches ${t}_{2} + \frac{1}{n ∗ {ω}_{n}}$.

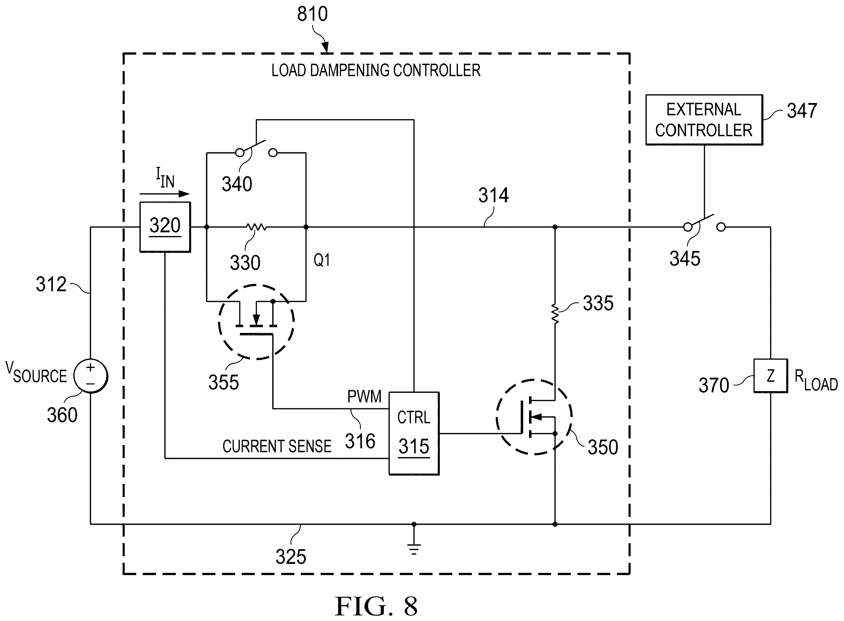

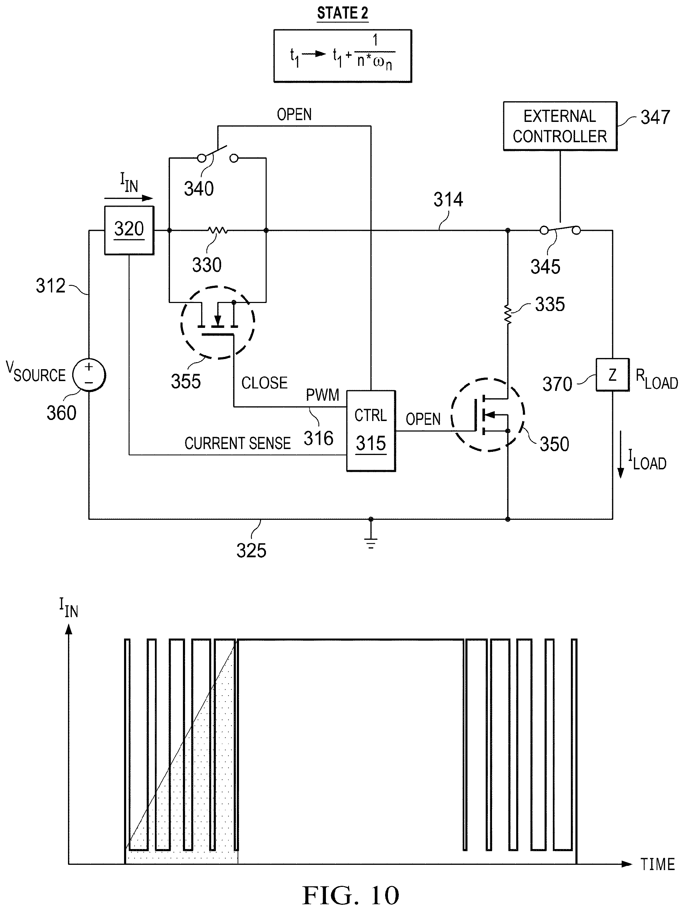

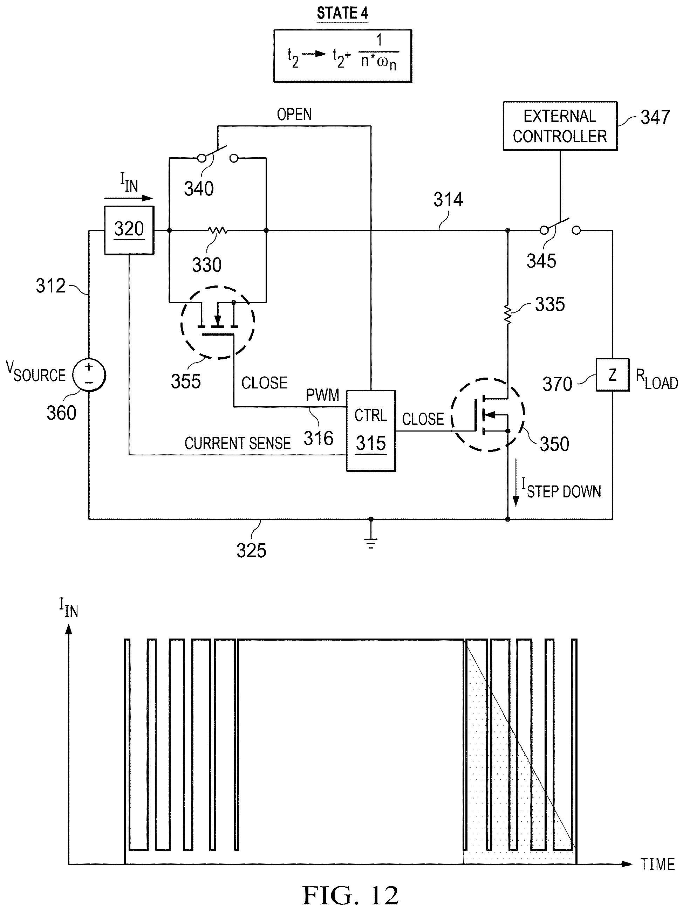

FIGURE 8 illustrates another load damping controller 810 that may be utilized by system 100 of FIGURE 1 as load damping controller 110, according to certain embodiments. In some embodiments, load damping controller 810, like load damping controller 310, includes control unit 315, current sensing unit 320, ramp-up resistor 330, ramp-down resistor 335, first switch 340, and third switch 350. Furthermore, load damping controller 310 includes voltage input node 312 that is coupled to voltage source 360, voltage output node 314 that may be selectively coupled to electrical load 370 via second switch 345, and ground node 325 that is coupled to voltage source 360 and electrical load 370 as illustrated. Unlike load damping controller 310, however, load damping controller 810 additionally includes a fourth switch 355 that selectively shorts/bypasses ramp-up resistor 330 based on a PWM signal 316 from control unit 315. In embodiments, the ramp-up resistor 330 may include functionality similar to the ramping resistors described with respect to FIGURES 14A and 14B, the ramp-down resistor 335 may include functionality similar to the auxiliary load resistor described with respect to FIGURES 14A and 14B, the first switch 340 may include functionality similar to the ramping switches described with respect to FIGURES 14A and 14B, the third switch 340 may include functionality similar to the auxiliary load switch described with respect to FIGURES 14A and 14B, and the fourth switch 355 may include functionality similar to the modulated switch described with respect to FIGURES 14A and 14B. In embodiments, fourth switch 355 and PWM signal 316 enable load damping controller 810 to modulate the ramp-up and/or ramp-down periods, as illustrated in FIGURES 10 and 12 and described in more detail below. In embodiments, modulating the ramp-up and/or ramp-down periods may include ramping up and/or ramping down the current through the fourth switch 355 by varying the duty cycle of the fourth switch 355 using PWM signal 316. The duty cycle of the fourth switch 355 may be varied (e.g., ramped-up and/or ramped-down) linearly over time from 0 to 100%, exponentially over time from 0 to 100%, logarithmically, over time from 0 to 100%, stepwise over a plurality of steps in which, at each step, the duty cycle of the fourth switch 355 is increased or decreased to increase or decrease the power provided to the electrical load (and/or the auxiliary load during ramp-down) by a fraction of the full power until complete ramp-up and/or ramp-down, and/or by any other function configured to enable the power to be ramped down from full to zero or ramped up from zero to full power over time.

It is noted that the configuration of load damping controller 310 illustrated in FIGURE 8 may correspond to a modulated ramping configuration as described with reference to FIGURE 14B.

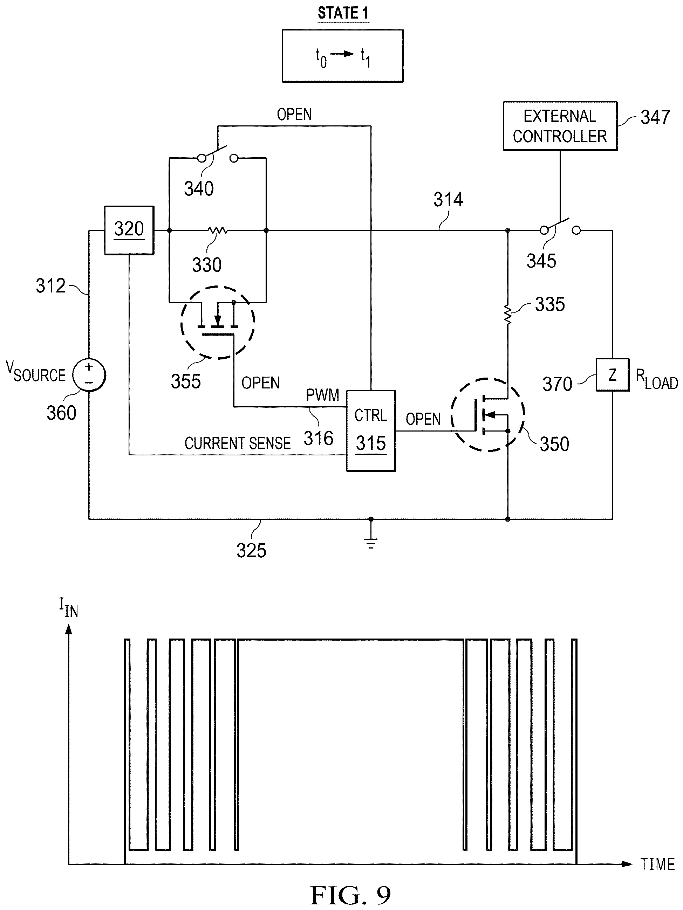

Control unit 315 is electrically coupled to current sensing unit 320, first switch 340, third switch 350, and fourth switch 355 as illustrated. In some embodiments, control unit 315 is purely an analog/digital circuit that does not include a microprocessor and does not execute any software. In other embodiments, control unit 315 may be a microprocessor that executes software stored in memory or any other appropriate integrated circuit (e.g., an FPGA, ASIC, a PLD, and the like). In some embodiments, control unit 315 is a proportional-integral-derivative (PID) control system that generates PWM signal 316. In general, control unit 315 senses, using current sensing unit 320, that an electrical current caused by electrical load 370 has exceeded a predetermined threshold and then controls switches 340, 350, and 355 in order to damp the change in electrical load application by electrical load 370. More details about the operation of control unit 315 within load damping controller 810 are described below in reference to FIGURES 9-11.

Load damping controller 810 includes fourth switch 355. Fourth switch 355 is electrically coupled in parallel to ramp-up resistor 330 and is utilized by load damping controller 110 to selectively short out ramp-up resistor 330 (e.g., as illustrated in FIGURES 10 and 12). Fourth switch 355 may be any appropriate contactor or switch (e.g., a field-effect transistor (FET), a solid-state relay, etc.).

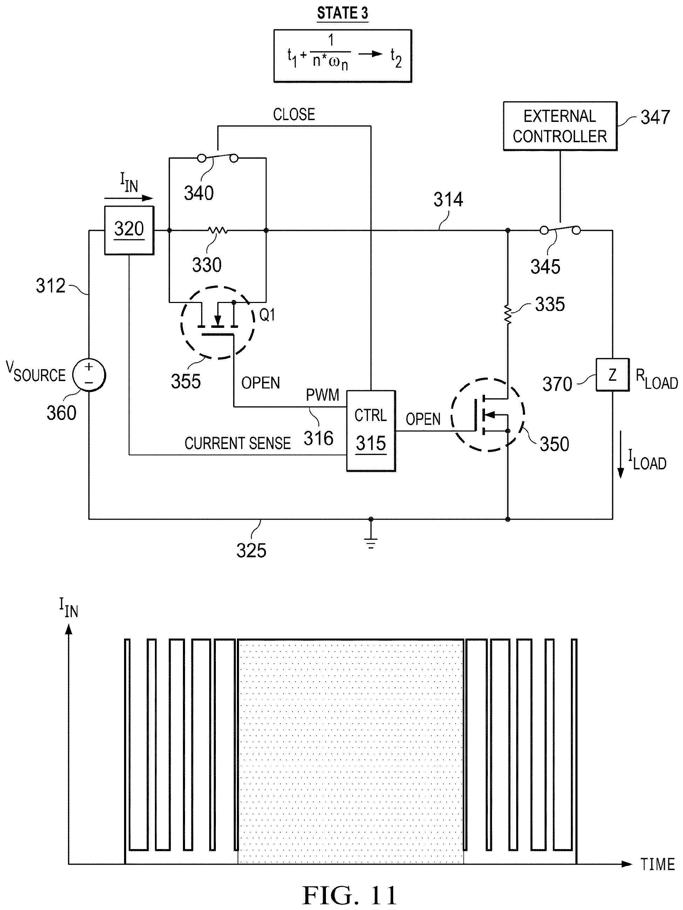

In operation, and in reference to FIGURES 8-12, load damping controller 810 ramps or otherwise modulates the change in electrical load application by electrical load 370 during two or more steps with a time delay in between. For example, in embodiments, the change in electrical load application may include modulating the current (e.g., via PWM) at linear varying duty cycles during ramp up and down. More specifically, and as illustrated in FIGURES 9-12, the different operation time periods of load damping controller 810 may be split into four specific states: STATE 1 (FIGURE 9), STATE 2 (FIGURE 10), STATE 3 (FIGURE 11), and STATE 4 (FIGURE 12). These states and figures will now be described in more detail below. While these figures illustrate four specific states, it should be understood that other embodiments may include less or more states, and some embodiments may repeat one or more of these states as desired or required by operational requirements. In one particular embodiment, operation of load damping controller 310 may progress successively from STATE 1 to STATE 2 to STATE 3 to STATE 4 and then returns to STATE 1.

As illustrated in FIGURE 9, STATE 1 of load damping controller 810 occurs between time *t*₀ and *t*₁ when no current is being drawn by electrical load 370. During STATE 1, second switch 345 is open (e.g., indicating that electrical load 370 is not yet activated and/or drawing power from voltage source 360), and control unit 315 controls or otherwise ensures that first switch 340 is open, third switch 350 is open, and fourth switch 355 is open. For example, control unit 315 may send electrical signals to each of first switch 340, third switch 350, and fourth switch 355 to operate the switches to the position indicated. In STATE 1, control unit 315 monitors current sensing unit 320 to determine if the electrical current I_{IN} into voltage input node 312 meets or exceeds a predetermined threshold. For example, in some embodiments, the predetermined threshold may be a value between 5 and 45 amperes. When control unit 315 determines that the electrical current I_{IN} into voltage input node 312 meets or exceeds the predetermined threshold, load damping controller 810 moves into STATE 2 described below.

As illustrated in FIGURE 10, STATE 2 of load damping controller 810 occurs between time *t*₁ and time ${t}_{1} + \frac{1}{{ω}_{n}}$. During STATE 2, second switch 345 is closed (e.g., indicating that electrical load 370 is activated and drawing power from voltage source 360), and the amount of power supplied to electrical load 370 is modulated (e.g., ramped as illustrated in FIGURE 10) between the electrical load 370 supplied in STATE 1 and STATE 3. To ramp the amount of power delivered to electrical load 370 during STATE 2, control unit 315 controls or otherwise ensures that first switch 340 is open, third switch 350 is open, and fourth switch 355 is rapidly closed/opened according to PWM signal 316 at time *t*₁. For example, control unit 315 may send electrical signals to each of first switch 340, third switch 350, and fourth switch 355 to operate the switches to the position indicated. This rapidly alternates the electrical current through ramp-up resistor 330 and fourth switch 355, thereby ramping the current supplied to electrical load 370. Load damping controller 810 remains in STATE 2 until the time reaches ${t}_{1} + \frac{1}{{ω}_{n}}$. At time ${t}_{1} + \frac{1}{{ω}_{n}}$, load damping controller 810 transitions to STATE 3 described below.

As illustrated in FIGURE 11, STATE 3 of load damping controller 810 occurs between time ${t}_{1} + \frac{1}{{ω}_{n}}$ and time *t*₂. In embodiments, *t*₂ may be defined by the time during which the controller detects a step down in load demand across electrical load 370. During STATE 3, a full amount of power is supplied to electrical load 370 as illustrated in FIGURE 11 due to ramp-up resistor 330 being shorted/bypassed by first switch 340 (e.g., the desired amount of power from electrical load 370 is supplied through load damping controller 810 and is not reduced or modulated by load damping controller 810). To deliver the full amount of power required by electrical load 370 during STATE 3, control unit 315 controls or otherwise ensures that first switch 340 is closed and third switch 350 is open between time ${t}_{1} + \frac{1}{{ω}_{n}}$ and time *t*₂. During time ${t}_{1} + \frac{1}{{ω}_{n}}$ and time *t*₂, fourth switch 355 may be open or closed, as the current of the full power may be shunted through first switch 340. For example, control unit 315 may send electrical signals to each of first switch 340 and third switch 350 (and in some embodiments to fourth switch 355) to operate the switches to the position indicated. This forces the electrical current to bypass ramp-up resistor 330, such as via the first switch 340, delivering the full amount of current (e.g., the current of the full power) required by electrical load 370. In alternative or additional embodiments, fourth switch 355 may provide the functionality of first switch 340 during STATE 3, which may enable the system to forego first switch 340. For example, fourth switch 355 may operate to allow the full power to flow through fourth switch 355 instead of through the first switch 340. In some embodiments, first switch 340 may be configured to operate with PWM functionality, which may enable the system to forgo fourth switch 355. In embodiments, load damping controller 810 remains in STATE 3 until the time reaches *t*₂. At time *t*₂, load damping controller 810 transitions to STATE 4 described below.

As illustrated in FIGURE 12, STATE 4 of load damping controller 810 occurs between time *t*₂ and time ${t}_{2} + \frac{1}{{ω}_{n}}$. From a general operational perspective, during STATE 4, electrical load 370 is effectively removed and, in response to the removal of the electrical load 370, electrical load 370 is replaced with an auxiliary electrical load through ramp-down resistor 335 and, during STATE 4, the current through ramp-down resistor 335 is linearly or stepwise ramped down via PWM. For example, during STATE 4, second switch 345 is open (e.g., indicating that electrical load 370 has been deactivated and no longer drawing power from voltage source 360) and the amount of power supplied to electrical load 370 is reduced (e.g., ramped or modulated as illustrated in FIGURE 12) from the power supplied in STATE 3 to STATE 5. To modulate the amount of power delivered to electrical load 370 during STATE 4, control unit 315 controls or otherwise ensures that first switch 340 is open, third switch 350 is closed, and fourth switch 355 is rapidly closed/opened according to PWM signal 316 between time *t*₂ and time ${t}_{2} + \frac{1}{{ω}_{n}}$. For example, control unit 315 may send electrical signals to each of first switch 340, third switch 350, and fourth switch 355 to operate the switches to the position indicated. This forces the electrical current through ramp-down resistor 335, thereby reducing the current supplied to electrical load 370. In some embodiments, fourth switch 355 may be determined to be closed, such as based on a determination that the impedance through the fourth switch 355 is higher than the impedance through first switch 340, where the power dissipation may be acceptable or to share the current therethrough. In embodiments, load damping controller 810 remains in STATE 4 until the time reaches ${t}_{2} + \frac{1}{{ω}_{n}}$.

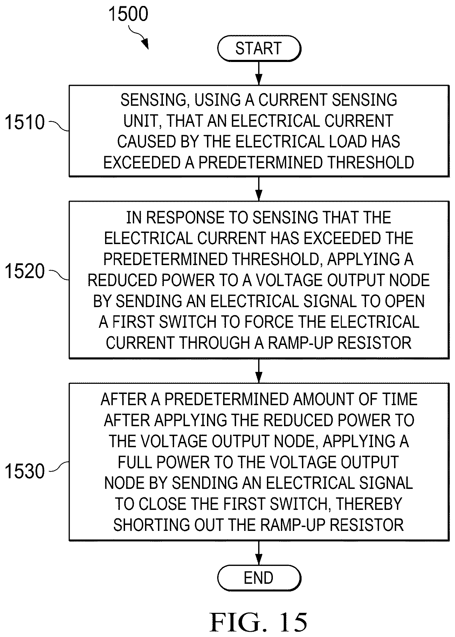

FIGURE 15 is a flow diagram of a method of damping an electrical load, according to certain embodiments. In some embodiments, method 1500 may be performed by load damping controllers 110 or 310. At step 1510, method 1500 senses, using a current sensing unit, that an electrical current caused by the electrical load has exceeded a predetermined threshold. In some embodiments, the current sensing unit is current sensing unit 320. In some embodiments, the electrical load is electrical load 370. In some embodiments, the electrical load is from an ice protection system for an aircraft such as ice protection system 120. In some embodiments, the electrical current is sensed at a voltage input node such as voltage input node 312. In some embodiments, the predetermined threshold may be a value between 5 and 45 amperes.

At step 1520, method 1500 applies, in response to sensing that the electrical current has exceeded the predetermined threshold in step 1510, a reduced power to a voltage output node by sending an electrical signal to open a first switch to force the electrical current through a ramp-up resistor. In some embodiments, the voltage output node is voltage output node 314. In some embodiments, the first switch is first switch 340. In some embodiments, the ramp-up resistor is ramp-up resistor 330.

At step 1530, method 1500 applies, after a predetermined amount of time which minimizes the oscillatory response of the mechanical system, after applying the reduced power to the voltage output node in step 1520, a full power to the voltage output node by sending an electrical signal to close the first switch, thereby shorting out the ramp-up resistor. In some embodiments, the predetermined amount of time after applying the reduced power to the voltage output node is an amount of time corresponding to a natural frequency of the oscillatory response caused by the change in electrical load. After step 1530, method 1500 may end.

In some embodiments, after a predetermined amount of time after applying full power to the voltage output node, method 1500 may additionally apply reduced power to the voltage output node by: sending an electrical signal to open the first switch, and sending an electrical signal to close a third switch that is coupled between a ramp-down resistor and a ground node, the ramp-down resistor coupled to the voltage output node. In some embodiments, the third switch is third switch 350. In some embodiments, the ramp-down resistor is ramp-down resistor 335.

Particular embodiments may repeat one or more steps of the method of FIGURE 15, where appropriate. Although this disclosure describes and illustrates particular steps of the method of FIGURE 15 as occurring in a particular order, this disclosure contemplates any suitable steps of the method of FIGURE 15 occurring in any suitable order. Moreover, although this disclosure describes and illustrates an example method including the particular steps of the method of FIGURE 15, this disclosure contemplates any suitable method including any suitable steps, which may include all, some, or none of the steps of the method of FIGURE 15, where appropriate. Furthermore, although this disclosure describes and illustrates particular components, devices, or systems carrying out particular steps of the method of FIGURE 15, this disclosure contemplates any suitable combination of any suitable components, devices, or systems carrying out any suitable steps of the method of FIGURE 15.

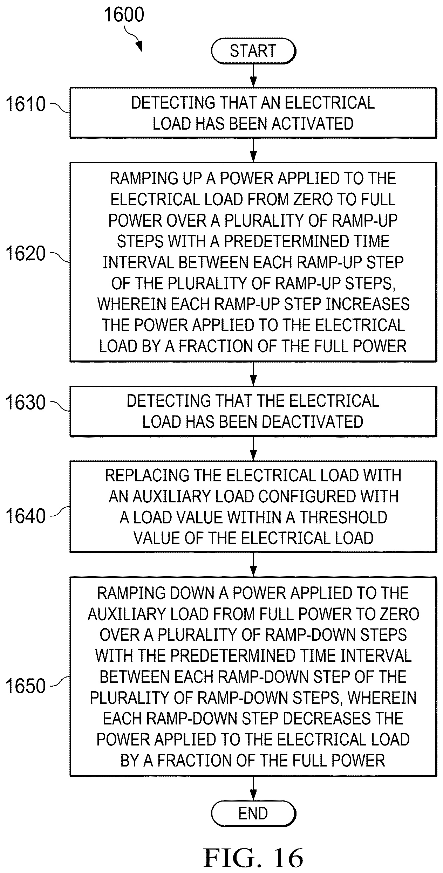

FIGURE 16 is a flow diagram of a method 1600 of damping an electrical load, according to certain embodiments. In some embodiments, method 1600 may be performed by load damping controllers 110 or 310. At step 1610, method 1600 detects that an electrical load has been activated. In some embodiments, functionality of an event detector (e.g., event detector 1420 as illustrated in FIGURE 14A) may be used to detect that an electrical load has been activated. In some embodiments, the electrical load is electrical load 370. In some embodiments, the electrical load is from an ice protection system for an aircraft such as ice protection system 120.

At step 1620, method 1600 ramps up a power applied to the electrical load from zero to full power over a plurality of ramp-up steps with a predetermined time interval between each ramp-up step of the plurality of ramp-up steps. In embodiments, each ramp-up step increases the power applied to the electrical load by a fraction of the full power. In embodiments, functionality of a multi-step ramping circuitry (e.g., multi-step ramping circuitry 1430 as illustrated in FIGURE 14A) may be used to ramp up a power applied to the electrical load from zero to full power over a plurality of ramp-up steps with a predetermined time interval between each ramp-up step of the plurality of ramp-up steps.

At step 1630, method 1600 detects that the electrical load has been deactivated. In some embodiments, functionality of an event detector (e.g., event detector 1420 as illustrated in FIGURE 14A) may be used to detect that an electrical load has been deactivated.

At step 1640, method 1600 replaces the electrical load with an auxiliary load configured with a load value within a threshold value of the electrical load. In some embodiments, functionality of an auxiliary load circuitry (e.g., auxiliary load circuitry 1435 as illustrated in FIGURE 14A) may be used to replace the electrical load with an auxiliary load configured with a load value within a threshold value of the electrical load.

At step 1650, method 1600 ramps down a power applied to the auxiliary load from full power to zero over a plurality of ramp-down steps with the predetermined time interval between each ramp-down step of the plurality of ramp-down steps. In embodiments, each ramp-down step decreases the power applied to the electrical load by a fraction of the full power. In embodiments, functionality of a multi-step ramping circuitry (e.g., multi-step ramping circuitry 1430 as illustrated in FIGURE 14A) may be used to ramp down a power applied to the auxiliary load from full power to zero over a plurality of ramp-down steps with the predetermined time interval between each ramp-down step of the plurality of ramp-down steps.

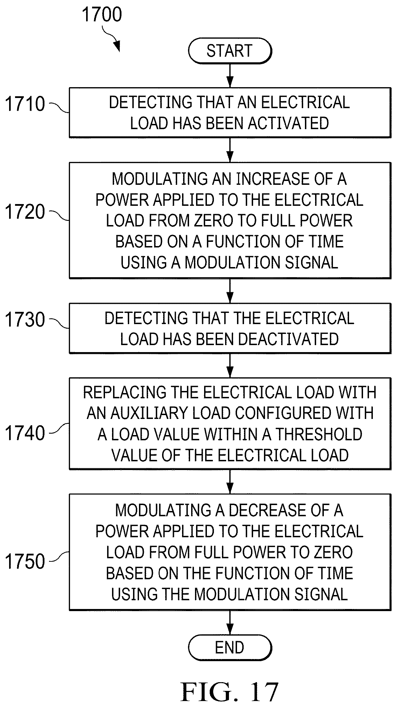

FIGURE 17 is a flow diagram of a method 1700 of damping an electrical load, according to certain embodiments. In some embodiments, method 1700 may be performed by load damping controllers 110 or 310. At step 1710, method 1700 detects that an electrical load has been activated. In some embodiments, functionality of an event detector (e.g., event detector 1420 as illustrated in FIGURE 14B) may be used to detect that an electrical load has been activated. In some embodiments, the electrical load is electrical load 370. In some embodiments, the electrical load is from an ice protection system for an aircraft such as ice protection system 120.

At step 1720, method 1700 modulates an increase of a power applied to the electrical load from zero to full power based on a function of time using a modulation signal. In embodiments, functionality of a modulated ramping circuitry (e.g., modulated ramping circuitry 1431 as illustrated in FIGURE 14B) may be used to modulate an increase of a power applied to the electrical load from zero to full power based on a function of time using a modulation signal.

At step 1730, method 1700 detects that the electrical load has been deactivated. In some embodiments, functionality of an event detector (e.g., event detector 1420 as illustrated in FIGURE 14B) may be used to detect that an electrical load has been deactivated.

At step 1740, method 1700 replaces the electrical load with an auxiliary load configured with a load value within a threshold value of the electrical load. In some embodiments, functionality of an auxiliary load circuitry (e.g., auxiliary load circuitry 1435 as illustrated in FIGURE 14B) may be used to replace the electrical load with an auxiliary load configured with a load value within a threshold value of the electrical load.

At step 1740, method 1700 modulates a decrease of a power applied to the electrical load from full power to zero based on the function of time using the modulation signal. In embodiments, functionality of a modulated ramping circuitry (e.g., modulated ramping circuitry 1431 as illustrated in FIGURE 14B) may be used to modulate a decrease of a power applied to the electrical load from full power to zero based on the function of time using the modulation signal.

Although the present disclosure and its advantages have been described in reference to aircraft 105 and ice protection system 120, it should be understood that load damping controller 110 may be utilized in any appropriate system where electrical load damping is needed. Load damping controller 110 is not limited to damping electrical loads for aircraft systems, and load damping controller 110 is not limited to damping electrical loads caused by ice protection systems such as ice protection system 120. One of ordinary skill in the art will understand that load damping controller 110 may be utilized for any appropriate system to damp electrical loads as described herein.

Although the present disclosure and its advantages have been described in detail, it should be understood that various changes, substitutions and alterations can be made herein without departing from the spirit and scope of the disclosure as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

Moreover, the description in this patent document should not be read as implying that any particular element, step, or function can be an essential or critical element that must be included in the claim scope. Also, none of the claims can be intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "member," "module," "device," "unit," "component," "element," "mechanism," "apparatus," "machine," "system," "processor," "processing device," or "controller" within a claim can be understood and intended to refer to structures known to those skilled in the relevant art, as further modified or enhanced by the features of the claims themselves, and can be not intended to invoke 35 U.S.C. § 112(f). Even under the broadest reasonable interpretation, in light of this paragraph of this specification, the claims are not intended to invoke 35 U.S.C. § 112(f) absent the specific language described above.

The disclosure may be embodied in other specific forms without departing from the spirit or essential characteristics thereof. For example, each of the new structures described herein, may be modified to suit particular local variations or requirements while retaining their basic configurations or structural relationships with each other or while performing the same or similar functions described herein. The present embodiments are therefore to be considered in all respects as illustrative and not restrictive. Accordingly, the scope of the disclosures can be established by the appended claims rather than by the foregoing description. All changes which come within the meaning and range of equivalency of the claims are therefore intended to be embraced therein. Further, the individual elements of the claims are not well-understood, routine, or conventional. Instead, the claims are directed to the unconventional inventive concept described in the specification.

## Claims

1. An electrical circuit for damping an electrical load, the electrical circuit comprising:
a ramping resistor coupled in series to a voltage output node;
a ramping switch coupled in parallel with the ramping resistor;
an auxiliary load resistor coupled to the voltage output node and an auxiliary load switch that is coupled to a ground node; and
a control unit configured to:
detect that an electrical load has been activated;
in response to detecting that the electrical load has been activated, apply a reduced power to the voltage output node by sending an electrical signal to open the ramping switch to direct the electrical current through the ramping resistor;
and
after a predetermined amount of time after applying the reduced power to the voltage output node, apply a full power to the voltage output node by sending an electrical signal to close the ramping switch to bypass the ramping resistor.

2. The electrical circuit of claim 1, wherein the control unit is further configured to:
detect that the electrical load has been deactivated;
in response to detecting that the electrical load has been deactivated:
replace the electrical load with an auxiliary load by sending an electrical signal to close the auxiliary load switch to direct the electrical current through the auxiliary load resistor;
apply a reduced power to the voltage output node and the auxiliary load by sending an electrical signal to open the ramping switch to direct the electrical current through the ramping resistor and the auxiliary load resistor; and
after a predetermined amount of time after applying the reduced power to the voltage output node and the auxiliary load, remove all power from the voltage output node and the auxiliary load by sending an electrical signal to open the auxiliary load switch.

3. The electrical circuit of claim 1 or claim 2, further comprising a current sensing unit coupled in series to the ramping resistor and a voltage input node, wherein the configuration of the control unit to detect that the electrical load has been activated includes configuration of the control unit to sense, using the current sensing unit, that an electrical current flowing through the electrical load has exceeded a predetermined threshold.

4. The electrical circuit of claim 3, wherein the current sensing unit comprises one or more of:
a shunt resistor coupled in series between the voltage input node and the ramping resistor;
an amplifier; and
a Hall effect sensor.

5. The electrical circuit of any preceding claim, wherein the ramping switch and the auxiliary load switch are each selected from the group consisting of:
a transistor; and
a solid-state relay.

6. The electrical circuit of any preceding claim, wherein the electrical load is from an ice protection system for an aircraft.

7. The electrical circuit of any preceding claim, wherein the predetermined amount of time after applying the reduced power to the voltage output node comprises an amount of time corresponding to a natural frequency of a torque response caused by a change in the electrical load.

8. An electrical circuit for damping an electrical load, the electrical circuit comprising:
a bypass switch coupled in series to a voltage output node;
an auxiliary load resistor coupled to the voltage output node and an auxiliary load switch that is coupled to a ground node;
a modulated switch that is coupled in parallel with the bypass resistor; and
a control unit operable to:
detect that an electrical load coupled to the voltage output node has been activated; and
in response to detecting that the electrical load has been activated, modulate an increase of a power applied to the electrical load through the voltage output node from zero to full power over a ramping up period by gradually increasing a duty cycle of the modulated switch from zero to 100% over the ramping up period, wherein an amount of power applied to the electrical load is based on the duty cycle of the modulated switch, and wherein a 100% duty cycle for the modulated switch is configured to apply full power to the electrical load through the voltage output node.

9. The electrical circuit of claim 8, further comprising:
sending an electrical signal to close the bypass switch to bypass the modulated switch through the bypass switch in response to the duty cycle of the modulated switch reaching 100%.

10. The electrical circuit of claim 8 or claim 9, wherein the control unit is further configured to:
detect that the electrical load has been deactivated;
in response to detecting that the electrical load has been deactivated:
replace the electrical load with an auxiliary load by sending an electrical signal to close the auxiliary load switch to direct the electrical current through the auxiliary load resistor;
direct the electrical current through the modulated switch;
modulate a decrease of the power applied to the auxiliary load from full power to zero over a ramping down period by gradually decreasing the duty cycle of the modulated switch from 100% to zero over the ramping down period, wherein a zero duty cycle for the modulated switch is configured to provide no power to the electrical load through the voltage output node; and
send an electrical signal to open the auxiliary load switch in response to the duty cycle of the modulated switch reaching zero; and optionally
wherein directing the electrical current through the modulated switch includes sending an electrical signal to open the bypass switch to direct the electrical current through the modulated switch.

11. The electrical circuit of any of claims 8 to 10, further comprising a current sensing unit coupled in series to the ramping resistor and a voltage input node, wherein the configuration of the control unit to detect that the electrical load has been activated includes configuration of the control unit to sense, using the current sensing unit, that an electrical current flowing through the electrical load has exceeded a predetermined threshold; and optionally:
the current sensing unit comprises one or more of:
a shunt resistor coupled in series between the voltage input node and the modulated switch;
an amplifier; and
a Hall effect sensor.

12. The electrical circuit of any of claims 8 to 11, wherein the bypass switch, the auxiliary load switch, and the modulated switch are each selected from the group consisting of:
a field-effect transistor; and
a solid-state relay.

13. The electrical circuit of any of claims 8 to 12, wherein the electrical load is from an ice protection system for an aircraft.

14. A method of damping an electrical load, the method comprising:
detecting that an electrical load has been activated;
ramping up a power applied to the electrical load from zero to full power over a plurality of ramp-up steps with a predetermined time interval between each ramp-up step of the plurality of ramp-up steps, wherein each ramp-up step increases the power applied to the electrical load by a fraction of the full power;
detecting that the electrical load has been deactivated;
replacing the electrical load with an auxiliary load configured with a load value within a threshold value of the electrical load;
ramping down a power applied to the auxiliary load from full power to zero over a plurality of ramp-down steps with the predetermined time interval between each ramp-down step of the plurality of ramp-down steps, wherein each ramp-down step decreases the power applied to the electrical load by a fraction of the full power.

15. The method of claim 14, wherein the predefined time interval is based on a natural frequency of a torque response by a mechanical system caused by a change in the electrical load; and/or
wherein the electrical load is from an ice protection system for an aircraft.
